(19) Europäisches Patentamt / European Patent Office / Office européen des brevets

(11) **EP 3 992 321 A1**

(12) **EUROPEAN PATENT APPLICATION**
published in accordance with Art. 153(4) EPC

(43) Date of publication:
**04.05.2022 Bulletin 2022/18**

(21) Application number: **20831431.0**

(22) Date of filing: **17.02.2020**

(51) International Patent Classification (IPC):
**C22C 9/04** (2006.01)    **C22F 1/00** (2006.01)
**C22F 1/08** (2006.01)

(52) Cooperative Patent Classification (CPC):
**C22C 9/04; C22F 1/08;** C22F 1/00

(86) International application number:
**PCT/JP2020/006037**

(87) International publication number:
**WO 2020/261636 (30.12.2020 Gazette 2020/53)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 25.06.2019   JP 2019116914
12.07.2019   JP 2019130143
31.07.2019   JP 2019141096
09.09.2019   JP 2019163773
11.12.2019   PCT/JP2019/048438
11.12.2019   PCT/JP2019/048455
23.12.2019   PCT/JP2019/050255

(71) Applicant: **Mitsubishi Materials Corporation**
**Chiyoda-ku**
**Tokyo 100-8117 (JP)**

(72) Inventors:
• **OISHI Keiichiro**
**Sakai-shi, Osaka 590-0906 (JP)**
• **SUZAKI Kouichi**
**Sakai-shi, Osaka 590-0906 (JP)**
• **GOTO Hiroki**
**Sakai-shi, Osaka 590-0906 (JP)**

(74) Representative: **Hoffmann Eitle**
**Patent- und Rechtsanwälte PartmbB**
**Arabellastraße 30**
**81925 München (DE)**

(54) **FREE-CUTTING COPPER ALLOY CASTING, AND METHOD FOR PRODUCING FREE-CUTTING COPPER ALLOY CASTING**

(57) This copper alloy casting includes, in terms of mass%: Cu: higher than 58.5% and lower than 65.0%; Si: higher than 0.40% and lower than 1.40%; Pb: higher than 0.002% and lower than 0.25%; P: higher than 0.003% and lower than 0.19%; and Bi: 0.001% to 0.100% as an optional element, with the balance being Zn and inevitable impurities, the total content of Fe, Mn, Co, and Cr is lower than 0.45% and the total content of Sn and Al is lower than 0.45%, a relationship of $56.0 \leq f1 = [Cu]$ $- 5 \times [Si] + 0.5 \times [Pb] + 0.5 \times [Bi] - 0.5 \times [P] \leq 59.5$ is satisfied, when Bi is included, a relationship of $0.003 < f0 = [Pb] + [Bi] < 0.25$ is further satisfied, constituent phases of a metallographic structure satisfy relationships of $20 \leq (\alpha) \leq 80$, $18 \leq (\beta) \leq 80$, $0 \leq (\gamma) < 5$, $20 \times (\gamma) / (\beta) < 4$, $18 \leq (Y)^{1/2} \times 3 + (\beta) \times (-0.5 \times [Si]^2 + 1.5 \times [Si]) \leq 82$, and $33 \leq (\gamma)^{1/2} \times 3 + (\beta) \times (-0.5 \times [Si]^2 + 1.5 \times [Si]) + ([Pb] + [Bi])^{1/2} \times 38 + ([P])^{1/2} \times 15$, and a compound including P is present in $\beta$ phase.

EP 3 992 321 A1

**Description**

TECHNICAL FIELD

The present invention relates to free-cutting copper alloy castings having excellent machinability and castability, a high strength, and a significantly reduced lead content and a method for producing the free-cutting copper alloy castings. The present invention relates to free-cutting copper alloy castings that are used for mechanical components, sliding components, measuring instrument components, precision mechanical components, medical components, automobile components, electrical and electronic apparatus components, pressure vessels, fittings for construction, daily necessaries, toys, drink-related devices and components, devices and components for water drainage, industrial plumbing components, and components relating to liquid or gas such as drinking water, industrial water, drainage water, or hydrogen, and a method for producing the free-cutting copper alloy castings. Examples of specific component names include valves, joints, stems, faucet fittings, faucets, waste plugs, gears, flanges, bearings, sleeves, and sensors. The present invention relates to these free-cutting copper alloy castings used for the components that are made by machining, and a method for producing the free-cutting copper alloy castings.

The present application claims priority on Japanese Patent Application No. 2019-116914 filed on June 25, 2019, Japanese Patent Application No. 2019-130143 filed on July 12, 2019, Japanese Patent Application No. 2019-141096 filed on July 31, 2019, Japanese Patent Application No. 2019-163773 filed on September 9, 2019, International Patent Application No. PCT/JP2019/048438 filed on December 11, 2019, International Patent Application No. PCT/JP2019/048455 filed on December 11, 2019, and International Patent Application No. PCT/JP2019/050255 filed on December 23, 2019, the contents of which are incorporated herein by reference.

BACKGROUND ART

Conventionally, a Cu-Zn-Pb alloy (so-called a free-cutting brass bar, brass for forging, or brass for casting) or a Cu-Sn-Zn-Pb alloy (so-called bronze casting: gunmetal) having excellent machinability was generally used for automobile components, electrical, home appliance, and electronic apparatus components, mechanical components, stationaries, precision mechanical components, medical components, and devices and components relating to liquid or gas such as drinking water, industrial water, drainage water, or hydrogen, specific component names of which include valve, joint, faucet fitting, sensor, nut, and screw.

A Cu-Zn-Pb alloy includes 56% to 65 mass% Cu, 1 to 4 mass% Pb, and the balance is Zn. A Cu-Sn-Zn-Pb alloy includes 80% to 88 mass% Cu, 2 to 8 mass% Sn, 1 to 8 mass% Pb, and the balance is Zn.

However, recently, Pb's influence on human body and the environment is becoming a concern, and momentum to regulate Pb is increasing in various countries. For example, a regulation for reducing the Pb content in drinking water supply devices to 0.25 mass% or lower came into force in January 2010 in California, the United States. In countries other than the United States also, such regulation is rapidly being established, and development of a copper alloy material that meets the requirements of the regulation on Pb content is in demand.

In addition, in other industrial fields such as those of automobiles, electrical and electronic apparatuses, and machines, strengthening of regulations on Pb content including elimination of exemptions has been actively discussed like in the field of drinking water although in European regulations of ELV and RoHS, free-cutting copper alloys are exceptionally allowed to include up to 4 mass% Pb.

While there is a trend to strengthen Pb regulations for free-cutting copper alloys, alloys like (1) Cu-Zn-Bi alloy or Cu-Zn-Bi-Se alloy including Bi having machinability (machining performance, machinability-improvement function) or, in some cases, including not only Bi but also Se instead of Pb, (2) Cu-Zn alloy including a high concentration of Zn in which the amount of β phase is increased to improve machinability, (3) Cu-Zn-Si alloy or Cu-Zn-Sn alloy including large amounts of γ phase and κ phase having machinability instead of Pb, (4) Cu-Zn-Sn-Bi alloy including a large amount of γ phase and Bi are proposed.

For example, Patent Documents 1 and 15 disclose a method of improving corrosion resistance and machinability by adding about 1.0 to 2.5 mass% Sn and about 1.5 to 2.0 mass% Bi to a Cu-Zn alloy such that γ phase precipitates.

However, alloys including Bi instead of Pb have many problems. For example, Bi has lower machinability than Pb. Bi may be harmful to human body like Pb. Bi has a resourcing problem because it is a rare metal. And, Bi embrittles a copper alloy material.

In addition, as disclosed in Patent Document 1, even if γ phase is precipitated in a Cu-Zn-Sn alloy, γ phase including Sn has poor machinability as demonstrated by the fact that it requires co-addition of Bi having machinability.

Further, it is absolutely impossible to replace a free-cutting copper alloy containing lead with a Cu-Zn binary alloy including a large amount of β phase since even though β phase contributes to improvement of machinability, it has lower machinability than Pb.

For this reason, Cu-Zn-Si alloys including Si instead of Pb are proposed as free-cutting copper alloys in, for example, Patent Documents 2 to 10.

Patent Documents 2 and 3 mainly disclose alloys containing 69 to 79 mass% Cu and 2 to 4 mass% Si, in which excellent machinability is realized without including Pb or with a small amount of Pb by the excellent machinability of $\gamma$ phase, or, in some cases, $\kappa$ phase formed in an alloy comprising high concentration of Cu and Si. By including higher than or equal to 0.3 mass% Sn and higher than or equal to 0.1 mass% Al, formation of $\gamma$ phase having machinability is further increased and accelerated such that the alloys' machinability can be improved. Further, improvement of corrosion resistance is devised by formation of a large amount of $\gamma$ phase.

Also, In Patent Document 4, excellent machinability is obtained by adding an extremely small amount (0.02 mass% or less) of Pb and simply defining the total area of the $\gamma$ phase and the $\kappa$ phase contained mainly in consideration of the Pb content.

Further, Patent Documents 5 and 6 propose casting products made of Cu-Zn-Si alloy in which extremely small amounts of P and Zr are included in order to reduce the size of crystal grains of the casting, and recite that the P/Zr ratio and the like are important.

Patent Document 7 proposes a copper alloy in which Fe is included in a Cu-Zn-Si alloy.

Patent Document 8 proposes a copper alloy in which Sn, Fe, Co, Ni, and Mn are included in a Cu-Zn-Si alloy.

Patent Document 9 proposes a Cu-Zn-Si alloy having an $\alpha$ phase matrix including $\kappa$ phase in which area ratios of $\beta$ phase, $\gamma$ phase, and $\mu$ phase are limited.

Patent Document 10 proposes a Cu-Zn-Si alloy in which the length of the longer sides of $\gamma$ phase and the length of the longer sides of $\mu$ phase are defined.

Patent Document 11 proposes a Cu-Zn-Si alloy to which Sn and Al are added.

Patent Document 12 proposes a Cu-Zn-Si alloy in which $\gamma$ phase is distributed in the form of particles at a phase boundary between $\alpha$ phase and $\beta$ phase to improve machinability.

Patent Document 13 proposes improvement of cold workability by having a Cu-Zn alloy contain Si such that $\beta$ phase is dispersed.

Patent Document 14 proposes a Cu-Zn alloy to which Sn, Pb, and Si are added.

Patent Document 15 proposes a Cu-Zn alloy whose corrosion resistance is improved by including Sn.

Now, as described in Patent Document 13 and Non-Patent Document 1, in Cu-Zn-Si alloys, it is known that, even when looking at only those containing Cu at a concentration of 60 mass% or higher, Zn at a concentration of 40 mass% or lower, and Si at a concentration of 10 mass% or lower, 10 kinds of metallic phases - $\beta$ phase, $\gamma$ phase, $\delta$ phase, $\epsilon$ phase, $\zeta$ phase, $\eta$ phase, $\kappa$ phase, $\mu$ phase, and $\chi$ phase, in some cases, 13 kinds of metallic phases including additional phases of $\alpha'$, $\beta'$, and $\gamma'$ are present aside from the matrix of $\alpha$ phase. Further, it is empirically known that, as the number of additive elements increases, the metallographic structure becomes complicated, and a new phase or intermetallic compound may appear. In addition, it is also empirically well known that there is a large difference in the constitution of metallic phases between what an equilibrium phase diagram shows and that of an actually produced alloy. Further, it is well known that the compositions of these phases change depending on the concentrations of Cu, Zn, Si, and the like in a copper alloy and processing heat history.

Incidentally, in Cu-Zn-Pb alloys including Pb, the Cu concentration is about 60 mass% whereas in all the Cu-Zn-Si alloys described in Patent Documents 2 to 10, the Cu concentration is 69 mass% or higher, and a reduction in the concentration of expensive Cu is desired from a viewpoint of economic efficiency and the like.

In Patent Document 11, Sn and Al are contained in a Cu-Zn-Si alloy as indispensable elements in order to obtain excellent corrosion resistance. The alloy also requires a large amount Pb, or Bi in order to realize excellent machinability.

Patent Document 12 discloses copper alloy castings free of Pb containing Cu at a concentration of about 65 mass% or higher and having good castability and mechanical strength. It also discloses that machinability is improved by $\gamma$ phase, and some examples containing large amounts of Sn, Mn, Ni Sb, and B are described in the document.

In addition, for conventional leaded free-cutting copper alloys, it is expected that machining such as turning or drilling can be performed without troubles for at least 24 hours and without replacement of cutting tool or adjustment such as polishing of cutting edge for 24 hours. Although depending on the degree of difficulty of machining, the same level of machinability is expected for alloys containing a significantly reduced amount of Pb.

Now, in Patent Document 7, the Cu-Zn-Si alloy includes Fe, and Fe and Si form an intermetallic compound of Fe-Si which is harder and more brittle than $\gamma$ phase. This intermetallic compound has problems like reducing tool life of a cutting tool during machining and generation of hard spots during polishing, which impairs the external appearance. In addition, since Si, an additive element, is consumed as an intermetallic compound as it combines with Fe, the performance of the alloy deteriorates.

In addition, in Patent Document 8, Sn, Fe, and Mn are added to a Cu-Zn-Si alloy. However, Fe and Mn both combine with Si to form hard and brittle intermetallic compounds. Therefore, such addition causes problems during machining or polishing as disclosed by Patent Document 7.

PRIOR ART DOCUMENTS

Patent Document

Patent Document 1: PCT International Publication No. WO2008/081947
Patent Document 2: Japanese Unexamined Patent Application, First Publication No. 2000-119775
Patent Document 3: Japanese Unexamined Patent Application, First Publication No. 2000-119774
Patent Document 4: PCT International Publication No. WO2007/034571
Patent Document 5: PCT International Publication No. WO2006/016442
Patent Document 6: PCT International Publication No. WO2006/016624
Patent Document 7: Published Japanese Translation No. 2016-511792 of the PCT International Publication
Patent Document 8: Japanese Unexamined Patent Application, First Publication No. 2004-263301
Patent Document 9: Japanese Unexamined Patent Application, First Publication No. 2013-104071
Patent Document 10: PCT International Publication No. WO2019/035225
Patent Document 11: Japanese Unexamined Patent Application, First Publication No. 2018-048397
Patent Document 12: Published Japanese Translation No. 2019-508584 of the PCT International Publication
Patent Document 13: United States Patent No. 4055445
Patent Document 14: Japanese Unexamined Patent Application, First Publication No. 2016-194123
Patent Document 15: PCT International Publication No. WO2005/093108

Non-Patent Document

Non-Patent Document 1: Genjiro MIMA, Masaharu HASEGAWA, Journal of the Japan Copper and Brass Research Association, 2 (1963), p. 62 to 77

DISCLOSURE OF INVENTION

Problems to be Solved by the Invention

The present invention has been made in order to solve the above-described problems in the conventional art, and its object is to provide free-cutting copper alloy castings having excellent machinability and castability, a high strength, excellent toughness, and a significantly reduced lead content, and a method for producing the free-cutting copper alloy castings.

In this specification, drilling refers to making holes with a drill. Unless specified otherwise, excellent machinability refers to low cutting resistance and good or excellent chip breakability during turning with a lathe or drilling. Cooling rate refers to the average cooling rate in a given temperature range. Conductivity refers to electrical conductivity and thermal conductivity. In addition, $\beta$ phase includes $\beta'$ phase, $\gamma$ phase includes $\gamma'$ phase, and $\alpha$ phase includes $\alpha'$ phase. Particles containing Bi refer to particles that contain both Bi and Pb (particles of an alloy comprising Bi and Pb) and is sometimes simply denominated as Bi particles. Copper alloy casting is sometimes simply denominated as alloy. 24 hours refer to one day. P-containing compound is a compound including P and at least either Si or Zn or both Si and Zn, in some cases, further including Cu and/or inevitable impurities such as Fe, Mn, Cr, or Co. A P-containing compound is a compound such as P-Si, P-Si-Zn, P-Zn, or P-Zn-Cu. P-containing compound is also denominated as a compound including P, Si, and Zn.

Solutions for Solving the Problems

In order to solve the above-described problems and to achieve the above-described object, the present inventors conducted a thorough investigation and obtained the following findings.

Patent Documents 4 and 6 disclose that in Cu-Zn-Si alloys, $\beta$ phase does not substantially contribute to but rather inhibits machinability. Patent Documents 2 and 3 recite that when $\beta$ phase is present, $\beta$ phase is changed into $\gamma$ phase by heat treatment. In Patent Documents 9 and 10, also, the amount of $\beta$ phase is significantly limited.

First, the present inventors diligently studied $\beta$ phase that had been known to have no effect on machinability of a Cu-Zn-Si alloy in the conventional art, and discovered a composition of $\beta$ phase that has a large effect on machinability.

However, there still was a significant difference in machinability in terms of chip breakability and cutting resistance compared with a free-cutting brass including 3 mass% Pb even if $\beta$ phase containing Si, an element that has a significant effect on machinability, was present.

Then we learned that there was a way to make a further improvement in the metallographic structure for the solution of the problem. First, in order to improve the machinability (machining performance, machinability-improvement function) of β phase itself, P was added to a Cu-Zn-Si alloy casting so that it was solid solubilized in β phase and P-containing compounds (for example, P-Si, P-Zn, P-Si-Zn, or P-Zn-Cu, etc.) having a dimension of about 0.3 to 3 μm were precipitated in β phase. As a result, the machinability of β phase improved more.

However, β phase with improved machinability has poor ductility and toughness. In order to improve ductility of β phase without impairing its machinability, the amounts of β phase and α phase were controlled to appropriate levels. On the other hand, α phase has poor machinability. In order to complement the weakness of α phase and obtain excellent machinability, a very small amount Pb was added to the casting where an appropriate amount of β phase having further improved machinability was present. As a result, improvement of chip breakability and reduction of cutting resistance were realized. A copper alloy casting according to the present invention having machinability comparable to that of a copper alloy casting to which a large amount of Pb is added was thus invented by selectively and skillfully combining the following two improvement means.

(1) Enhance the machinability of α phase itself by including a very small amount of Bi that is known to have a slightly less machinability improvement effect than Pb instead of Pb.
(2) Improve the machinability by including a small amount of γ phase.

A free-cutting copper alloy casting according to the first aspect of the present invention includes: higher than 58.5 mass% and lower than 65.0 mass% of Cu; higher than 0.40 mass% and lower than 1.40 mass% of Si; higher than 0.002 mass% and lower than 0.25 mass% of Pb; and higher than 0.003 mass% and lower than 0.19 mass% of P, and higher than or equal to 0.001 mass% and lower than or equal to 0.100 mass% of Bi as an optional element, with the balance being Zn and inevitable impurities,

wherein among the inevitable impurities, the total content of Fe, Mn, Co, and Cr is lower than 0.45 mass% and the total content of Sn and Al is lower than 0.45 mass%,
when a Cu content is represented by [Cu] mass%, a Si content is represented by [Si] mass%, a Pb content is represented by [Pb] mass%, a Bi content is represented by [Bi] mass%, and a P content is represented by [P] mass%, a relationship of

$$56.0 \leq f1 = [Cu] - 5 \times [Si] + 0.5 \times [Pb] + 0.5 \times [Bi] -$$

$$0.5 \times [P] \leq 59.5 \text{ is satisfied,}$$

when Bi is not included, [Bi] in f1 is 0,
when Bi is included, a relationship of $0.003 < f0 = [Pb] + [Bi] < 0.25$ is further satisfied,
in constituent phases of a metallographic structure excluding non-metallic inclusions, when an area ratio of α phase is represented by (α)%, an area ratio of γ phase is represented by (γ)%, and an area ratio of β phase is represented by (β)%, relationships of

$$20 \leq (\alpha) \leq 80,$$

$$18 \leq (\beta) \leq 80,$$

$$0 \leq (\gamma) < 5,$$

$$20 \times (\gamma) / (\beta) < 4,$$

$$18 \leq (\gamma)^{1/2} \times 3 + (\beta) \times (-0.5 \times [Si]^2 + 1.5 \times [Si]) \leq 82,$$

and

$$33 \leq (\gamma)^{1/2} \times 3 + (\beta) \times (-0.5 \times [Si]^2 + 1.5 \times [Si]) + ([Pb] + [Bi])^{1/2} \times 38 + ([P])^{1/2} \times 15$$

are satisfied, when Bi is not included, [Bi] in the expression is 0, and
a compound including P is present in β phase.

A free-cutting copper alloy casting according to the second aspect of the present invention includes: higher than 59.0 mass% and lower than 65.0 mass% of Cu; higher than 0.50 mass% and lower than 1.35 mass% of Si; higher than 0.010 mass% and lower than 0.20 mass% of Pb; higher than 0.010 mass% and lower than 0.15 mass% of P; and higher than or equal to 0.001 mass% and lower than or equal to 0.100 mass% of Bi as an optional element, with the balance being Zn and inevitable impurities,

wherein among the inevitable impurities, the total content of Fe, Mn, Co, and Cr is lower than 0.40 mass% and the total content of Sn and Al is lower than 0.40 mass%,
when a Cu content is represented by [Cu] mass%, a Si content is represented by [Si] mass%, a Pb content is represented by [Pb] mass%, a Bi content is represented by [Bi] mass%, and a P content is represented by [P] mass%, a relationship of

$$56.3 \leq f1 = [Cu] - 5 \times [Si] + 0.5 \times [Pb] + 0.5 \times [Bi] - 0.5 \times [P] \leq 59.2$$

is satisfied,
when Bi is not included, [Bi] in f1 is 0,
when Bi is included, a relationship of

$$0.020 \leq f0 = [Pb] + [Bi] < 0.20$$

is further satisfied,
in constituent phases of a metallographic structure excluding non-metallic inclusions, when an area ratio of α phase is represented by (α)%, an area ratio of γ phase is represented by (γ)%, and an area ratio of β phase is represented by (β)%, relationships of

$$25 \leq (\alpha) \leq 75,$$

$$25 \leq (\beta) \leq 75,$$

$$0 \leq (\gamma) < 3,$$

$$20 \times (\gamma) / (\beta) < 2,$$

$$25 \leq (\gamma)^{1/2} \times 3 + (\beta) \times (-0.5 \times [Si]^2 + 1.5 \times [Si]) \leq 76,$$

and

$$40 \leq (\gamma)^{1/2} \times 3 + (\beta) \times (-0.5 \times [Si]^2 + 1.5 \times [Si]) + ([Pb] + [Bi])^{1/2} \times 38 + ([P])^{1/2} \times 15$$

are satisfied,
when Bi is not included, [Bi] in the expression is 0, and
a compound including P is present in β phase.

A free-cutting copper alloy casting according to the third aspect of the present invention includes: higher than 59.5 mass% and lower than 64.5 mass% of Cu; higher than 0.60 mass% and lower than 1.30 mass% of Si; higher than 0.010 mass% and lower than 0.15 mass% of Pb; higher than 0.020 mass% and lower than 0.14 mass% of P; and higher than 0.020 mass% and lower than or equal to 0.100 mass% of Bi,

with the balance being Zn and inevitable impurities,
wherein among the inevitable impurities, the total content of Fe, Mn, Co, and Cr is lower than 0.35 mass% and the total content of Sn and Al is lower than 0.35 mass%,
when a Cu content is represented by [Cu] mass%, a Si content is represented by [Si] mass%, a Pb content is represented by [Pb] mass%, a Bi content is represented by [Bi] mass%, and a P content is represented by [P] mass%, relationships of

$$0.040 \leq f0 = [Pb] + [Bi] < 0.18$$

and

$$56.5 \leq f1 = [Cu] - 5 \times [Si] + 0.5 \times [Pb] + 0.5 \times [Bi] - 0.5 \times [P] \leq 59.0$$

are satisfied,
in constituent phases of a metallographic structure excluding non-metallic inclusions, when an area ratio of α phase is represented by (α)%, an area ratio of γ phase is represented by (γ)%, and an area ratio of β phase is represented by (β)%, relationships of

$$30 \leq (\alpha) \leq 70,$$

$$30 \leq (\beta) \leq 70,$$

$$0 \leq (\gamma) < 2,$$

$$20 \times (\gamma) / (\beta) < 1,$$

$$30 \leq (\gamma)^{1/2} \times 3 + (\beta) \times (-0.5 \times [Si]^2 + 1.5 \times [Si]) \leq 70,$$

and

$$45 \leq (\gamma)^{1/2} \times 3 + (\beta) \times (-0.5 \times [Si]^2 + 1.5 \times [Si]) + ([Pb] + [Bi])^{1/2} \times 38 + ([P])^{1/2} \times 15$$

are satisfied,
a compound including P is present in β phase, and a particle including Bi is present in α phase.

A free-cutting copper alloy casting according to the fourth aspect of the present invention is the copper alloy casting according to any one of the first to third aspects of the present invention in which a solidification temperature range is 25°C or lower.

A free-cutting copper alloy casting according to the fifth aspect of the present invention is the copper alloy casting according to any one of the first to fourth aspects of the present invention in which a Vickers hardness is 105 Hv or higher, and an impact value obtained when a U-notch impact test is performed is 25 J/cm$^2$ or higher.

A free-cutting copper alloy casting according to the sixth aspect of the present invention is the free-cutting copper alloy casting according to any one of the first to fifth aspects of the present invention, which is used for a mechanical component, an automobile component, an electrical or electronic apparatus component, a toy, a sliding component, a pressure vessel, a measuring instrument component, a precision mechanical component, a medical component, a fitting for building construction, a faucet fitting, a drink-related device or component, a device or component for water drainage, or an industrial plumbing component.

A method for producing a free-cutting copper alloy casting according to the seventh aspect of the present invention is a method for producing the free-cutting copper alloy casting according to any one of the first to sixth aspects of the present invention which includes a melting and casting step, wherein in the melting and casting step, an average cooling rate in a temperature range from 530°C to 450°C in a process of cooling after casting is in a range of 0.1 °C/min or higher and 55 °C/min or lower.

Effects of Invention

According to one aspect of the present invention, a free-cutting copper alloy casting having excellent machinability and castability, a high strength, excellent toughness, and a significantly reduced amount of lead content, and a method for producing the free-cutting copper alloy casting can be provided.

BRIEF DESCRIPTION OF DRAWINGS

Fig. 1 is a picture showing a metallographic structure of a copper alloy of Test No. T07.
Fig. 2 is a picture showing a metallographic structure of the copper alloy of Test No. T35.
Fig. 3 is a picture showing a metallographic structure of the copper alloy of Test No. T106.
Fig. 4 is a diagram showing a cross-section of a casting obtained by casting in a Tatur mold in a Tatur Shrinkage Test.
Fig. 5 shows a macrostructure of a cross-section of a casting made of Alloy No. S01 obtained by performing a Tatur Shrinkage Test.
Fig. 6 is a picture of chips generated in the machining test of Test No. T07.
Fig. 7 is a picture of chips generated in the machining test of Test No. T35.
Fig. 8 is a picture of chips generated in the machining test of Test No. T106.

EMBODIMENTS FOR CARRYING OUT THE INVENTION

Below is a description of free-cutting copper alloy castings according to an embodiment of the present invention and a method for producing the free-cutting copper alloy castings.

The free-cutting copper alloy castings according to the embodiment are used for mechanical components such as valves, joints, parts and components for water supply and drainage, or pressure vessels, automobile components, electrical components, home appliance components, and electronic components, and devices and components which come in contact with liquid or gas such as drinking water, industrial water, or hydrogen.

Here, in this specification, an element symbol in parentheses such as [Zn] represents the content (mass%) of the element.

In embodiments of the present invention, using this content expressing method, composition relational expressions f0 and f1 are defined as follows.

When Bi is included, the expressions are defined as follows.

Composition Relational Expression f0 = [Pb] + [Bi]

Composition Relational Expression f1 = [Cu] − 5 × [Si]
+ 0.5 × [Pb] + 0.5 × [Bi] − 0.5 × [P]

When Bi is not included, [Bi] in f1 is 0. Therefore, in that case, f1 = [Cu] - 5 × [Si] + 0.5 × [Pb] - 0.5 × [P].

Further, in the embodiments, in constituent phases of the metallographic structure excluding non-metallic inclusions, area ratio of $\alpha$ phase is represented by $(\alpha)$%, area ratio of $\beta$ phase is represented by $(\beta)$%, and area ratio of $\gamma$ phase is represented by $(\gamma)$%. Area ratio of each of the phases will also be referred to as "amount of each of the phases", "proportion of each of the phases", or "proportion that each of the phases occupies". In the embodiments, plural metallographic structure relational expressions and metallographic structure and composition relational expressions are defined as follows.

Metallographic Structure Relational Expression f2 = $(\alpha)$
Metallographic Structure Relational Expression f3 = $(\beta)$
Metallographic Structure Relational Expression f4 = $(\gamma)$

$$\text{Metallographic Structure Relational Expression } f5 = 20 \times (\gamma) / (\beta)$$

$$\text{Metallographic Structure Relational Expression } f6 = (\gamma)^{1/2} \times 3 + (\beta) \times (-0.5 \times [Si]^2 + 1.5 \times [Si])$$

$$\text{Metallographic Structure and Composition Relational Expression } f6A = (\gamma)^{1/2} \times 3 + (\beta) \times (-0.5 \times [Si]^2 + 1.5 \times [Si]) + ([Pb] + [Bi])^{1/2} \times 38 + ([P])^{1/2} \times 15$$

When Bi is not included, [Bi] in f6A is 0. Therefore, in that case, f6A = $(\gamma)^{1/2} \times 3 + (\beta) \times (-0.5 \times [Si]^2 + 1.5 \times [Si]) + ([Pb])^{1/2} \times 38 + ([P])^{1/2} \times 15$.

A free-cutting copper alloy casting according to the first embodiment of the present invention includes: higher than 58.5 mass% and lower than 65.0 mass% Cu; higher than 0.40 mass% and lower than 1.40 mass% Si; higher than 0.002 mass% and lower than 0.25 mass% Pb; and higher than 0.003 mass% and lower than 0.19 mass% P; and higher than or equal to 0.001 mass% and lower than or equal to 0.100 mass% Bi as an optional element, with the balance being Zn and inevitable impurities, in which, among the inevitable impurities, the total content of Fe, Mn, Co, and Cr is lower than 0.45 mass% and the total content of Sn and Al is lower than 0.45 mass%, when Bi is included, the composition relational expression f0 is in a range of 0.003 < f0 < 0.25, the composition relational expression f1 is in a range of 56.0 ≤ f1 ≤ 59.5, the metallographic structure relational expression f2 is in a range of 20 ≤ f2 ≤ 80, the metallographic structure relational expression f3 is in a range of 18 ≤ f3 ≤ 80, the metallographic structure relational expression f4 is in a range of 0 ≤ f4 < 5, the metallographic structure relational expression f5 is in a range of f5 < 4, the metallographic structure relational expression f6 is in a range of 18 ≤ f6 ≤ 82, the metallographic structure and composition relational expression f6A is in a range of 33 ≤ f6A, and a compound including P is present in $\beta$ phase.

A free-cutting copper alloy casting according to the second embodiment of the present invention includes: higher than 59.0 mass% and lower than 65.0 mass% Cu; higher than 0.50 mass% and lower than 1.35 mass% Si; higher than 0.010 mass% and lower than 0.20 mass% Pb; higher than 0.010 mass% and lower than 0.15 mass% P; and higher than or equal to 0.001 mass% and lower than or equal to 0.100 mass% Bi as an optional element, with the balance being Zn and inevitable impurities, in which, among the inevitable impurities, the total content of Fe, Mn, Co, and Cr is lower than 0.40 mass% and the total content of Sn and Al is lower than 0.40 mass%, when Bi is included, the composition relational expression f0 is in a range of 0.020 ≤ f0 < 0.20, the composition relational expression f1 is in a range of 56.3 ≤ f1 ≤ 59.2, the metallographic structure relational expression f2 is in a range of 25 ≤ f2 ≤ 75, the metallographic structure relational expression f3 is in a range of 25 ≤ f3 ≤ 75, the metallographic structure relational expression f4 is in a range of 0 ≤ f4 < 3, the metallographic structure relational expression f5 is in a range of f5 < 2, the metallographic structure relational expression f6 is in a range of 25 ≤ f6 ≤ 76, the metallographic structure and composition relational expression f6A is in a range of 40 ≤ f6A, and a compound including P is present in $\beta$ phase.

A free-cutting copper alloy casting according to the third embodiment of the present invention includes: higher than 59.5 mass% and lower than 64.5 mass% Cu; higher than 0.60 mass% and lower than 1.30 mass% Si; higher than 0.010 mass% and lower than 0.15 mass% Pb; higher than 0.020 mass% and lower than 0.14 mass% P; and higher than 0.020 mass% and lower than or equal to 0.100 mass% Bi, with the balance being Zn and inevitable impurities, in which, among the inevitable impurities, the total content of Fe, Mn, Co, and Cr is lower than 0.35 mass% and the total content of Sn and Al is lower than 0.35 mass%, the aforementioned composition relational expression f0 is in a range of 0.040 ≤ f0 < 0.18, the composition relational expression f1 is in a range of 56.5 ≤ f1 ≤ 59.0, the metallographic structure relational expression f2 is in a range of 30 ≤ f2 ≤ 70, the metallographic structure relational expression f3 is in a range of 30 ≤ f3 ≤ 70, the metallographic structure relational expression f4 is in a range of 0 ≤ f4 < 2, the metallographic structure relational expression f5 is in a range of f5 < 1, the metallographic structure relational expression f6 is in a range of 30 ≤ f6 ≤ 70, the metallographic structure and composition relational expression f6A is in a range of 45 ≤ f6A, a compound including P is present in β phase, and a particle including Bi is present in α phase.

It should be noted here that, in a free-cutting copper alloy casting according to any one of the first to third embodiments of the present invention, it is preferable that a solidification temperature range is 25°C or lower.

In addition, it is preferable that a free-cutting copper alloy casting according to any one of the first to third embodiments of the present invention has a Vickers hardness of 105 Hv or higher and an impact value obtained by a U-notch impact test(an impact value measured by a U-notch impact test) is 25 J/cm$^2$ or higher.

The reasons why the component composition, the composition relational expressions f0 and f1, the metallographic structure relational expressions f2, f3, f4, f5, and f6, the metallographic structure and composition relational expression f6A, and the metallographic structure are defined as described above are explained below.

<Component Composition>

(Cu)

Cu is a main element of copper alloy castings according to an embodiment of the present invention. In order to achieve the object of the present invention, it is necessary to contain Cu in an amount exceeding 58.5 mass% at least. When the Cu content is 58.5 mass% or lower, the proportion of β phase exceeds 80% although depending on the contents of Si, Zn, P, and Pb and the production process, and as a result, a material made of such an alloy has poor ductility and toughness. Accordingly, the lower limit of the Cu content is higher than 58.5 mass%, preferably higher than 59.0 mass%, more preferably higher than 59.5 mass%, and still more preferably higher than 60.5 mass%.

On the other hand, when the Cu content is 65.0 mass% or higher, the proportion of β phase decreases and the proportion of γ phase increases although depending on the contents of Si, Zn, P, and Pb and the production process. In some cases, μ phase and/or other phases appear. As a result, excellent machinability cannot be obtained. Also, the alloy's ductility and toughness are poor. In addition, the solidification temperature range having a close relationship with castability widens. Accordingly, the Cu content is lower than 65.0 mass%, preferably lower than 64.5 mass%, more preferably lower than 64.2 mass%, and still more preferably lower than 64.0 mass%.

(Si)

Si is a main element of free-cutting copper alloy castings according to an embodiment of the present invention and contributes to formation of metallic phases such as κ phase, γ phase, μ phase, β phase, and ζ phase. Si improves the machinability, strength, wear resistance, and stress corrosion cracking resistance, reduces the viscosity of the melt, improves the fluidity of the melt, and improves the castability of the free-cutting copper alloy castings. Regarding machinability, the present inventors found out that β phase formed by including Cu, Zn, and Si in the above-described content ranges has excellent machinability. Examples of representative β phase having excellent machinability include β phase containing about 60 mass% Cu, about 1.3 mass% Si, and about 38.5 mass% Zn. In addition, the present inventors also found out that γ phase formed by including Cu, Zn, and Si in the above-described content ranges has excellent machinability if β phase is present.

Examples of representative composition of α phase include about 67 mass% Cu, about 0.8 mass% Si, and about 32 mass% Zn. Although machinability of α phase contained in an alloy having a composition within the range of an embodiment of the present invention is also improved by including Si, the degree of improvement brought by Si to α phase is far less than that brought to β phase.

In addition, due to inclusion of Si, α phase and β phase are strengthened by solid-solubilization, which in turn strengthens the alloy and also affects its ductility and toughness. When Si is included, the electrical conductivity of alloy decreases, but the electrical conductivity is improved by formation of β phase.

In order for a copper alloy casting to obtain excellent machinability and high strength, and improve fluidity of the melt and castability, it is necessary to include Si in an amount exceeding 0.40 mass%. The Si content is preferably higher than 0.50 mass%, more preferably higher than 0.60 mass%, and still more preferably higher than 1.00 mass%.

When the Si content is higher than 0.40 mass%, preferably higher than 0.50 mass%, and more preferably higher than 0.60 mass%, even if the amount of Bi is small, Bi particles come to be present in α phase. Further, when a large amount of Si is included, the number of Bi particles present in α phase increases. As a result, Bi that is said to have a lower effect on machinability than Pb can be utilized more effectively.

On the other hand, when the Si content is excessive, the amount γ phase increases excessively. In some cases, μ phase precipitates. γ phase has lower ductility and toughness than β phase and deteriorates the ductility of copper alloy castings. In particular, when the amount of γ phase is excessive, the thrust value in drilling increases. If the Si content is increased, the electrical conductivity of alloy deteriorates. In addition, although depending on the proportions of Cu and Zn contained, when the Si content is excessively high, the solidification temperature range is widened, and the castability is deteriorated. In the embodiments, obtaining good strength, toughness, and conductivity in addition to excellent castability is also aimed at. Therefore, the upper limit of the Si content is lower than 1.40 mass%, preferably lower than 1.35 mass%, more preferably lower than 1.30 mass%, and still more preferably lower than 1.25 mass%. Although depending on the production process and the Cu concentration, when the Si content is lower than about 1.3 mass%, the amount of γ phase is lower than about 2%. However, by appropriately increasing the proportion of β phase, excellent machinability can be maintained, and high strength and excellent toughness can be obtained.

When a Cu-Zn binary alloy as a base alloy includes third and fourth elements and the contents of the third and fourth elements increase or decrease, the properties and characteristics of β phase change. As described in Patent Documents 2 to 6, β phase present in an alloy including higher than or equal to about 69 mass% Cu, higher than or equal to about 2% Si, and Zn as the balance does not have the same properties or characteristics as β phase formed in an alloy of an embodiment of the present invention, for example, an alloy including about 63 mass% Cu, about 1.2 mass% Si, and Zn as the balance. Further, when a large amount of inevitable impurities are included, the characteristics of β phase also change. In some cases, properties including machinability change for the worse. In the case of γ phase also, the characteristics of γ phase to be formed change when the amounts of main elements or the blending ratio between them are changed. Also, when a large amount of inevitable impurities are included, the characteristics of γ phase change. Further, even when the composition is the same, the kinds of phases that are present, their amounts, the distribution of each element in each phase change depending on the production conditions such as cooling rate.

(Zn)

Like Cu and Si, Zn is a main element of free-cutting copper alloy castings according to an embodiment of the present invention, and is an element necessary to enhance machinability, strength, high temperature properties, and castability. Zn is described as the balance in the composition, but to be specific, its content is lower than about 41 mass% and preferably lower than about 40 mass% and higher than about 33 mass%, preferably higher than 34 mass%.

(P)

In a Cu-Zn-Si alloy comprising α phase and β phase, P is preferentially distributed in β phase. First of all, P can improve the machinability of β phase including Si by solid solubilizing in β phase. Further, by containing P and adjusting the production process, P-containing compounds having an average diameter of 0.3 to 3 μm are formed within β phase. Due to the compounds, in the case of turning, the three force components - principal cutting force, feed force, and thrust force decrease. In the case of drilling, the torque decreases among others. The three force components during turning, the torque during drilling, and the chip shape correlate to each other. The smaller the three force components and the torque, the more broken the chips get.

In addition, P has an action of reducing the size of crystal grains of α phase, and the machinability of copper alloy casting is improved by the action.

Basically, P-containing compounds are not formed at a temperature higher than 530°C in the process of solidification and cooling after casting. P is solid-solubilized mainly in β phase during cooling, and P-containing compounds precipitate mainly in β phase or at a phase boundary between β phase and α phase when cooled at a certain critical cooling rate or one lower than that. P-containing compounds rarely precipitate in α phase. When observed with a metallographic microscope, precipitates including P appear to have a small granular shape with an average particle size of about 0.5 to 3 μm. β phase including such precipitates can obtain even more excellent machinability. P-containing compound hardly affects the life of a cutting tool and does not substantially impair the ductility or toughness of copper alloy casting. Compound composed of Fe, Mn, Cr or Co and Si or P contributes to improvement of strength and wear resistance of copper alloy casting, but consumes Si and P in the alloy, causes the cutting resistance of the alloy to increase, deteriorates chip breakability, shortens the tool life, and impairs ductility of the alloy.

In addition, when P is added together with Si, P also exhibits an effect of facilitating the presence of Bicontaining particles in α phase, contributing to the improvement of α phase's machinability.

In order to exhibit the above-described effects, the lower limit of the P content is higher than 0.003 mass%, preferably higher than 0.010 mass%, more preferably higher than 0.020 mass%, and still more preferably higher than 0.030 mass%. If P is contained in an amount exceeding 0.010 mass%, P-containing compounds become visible with a 500X metallographic microscope. When the P content is higher than 0.020 mass%, P-containing compounds can be more clearly observed.

On the other hand, when P is contained in an amount of 0.19 mass% or more, precipitates are enlarged and the machinability improving effect of P is saturated. In addition, Si concentration in β phase is decreased causing machinability to deteriorate rather than improve, and ductility and toughness are also decreased. In addition, the solidification temperature range is widened, and the castability is poor. Therefore, the P content is lower than 0.19 mass%, preferably lower than 0.15 mass%, more preferably lower than 0.14 mass%, and still more preferably lower than 0.10 mass%. Even when the P content is lower than 0.05 mass%, a sufficient amount of P-containing compounds are formed.

Incidentally, the component ratio in the composition of a compound including, for instance, P or Si, gradually changes if the amount of an element that easily combines with Si or P such as Mn, Fe, Cr, or Co is increased. That is, P-containing compound having a significant effect of improving the machinability of β phase gradually changes into a compound having a less effect on machinability. Accordingly, at least the total content of Mn, Fe, Cr, and Co needs to be limited to less than 0.45 mass%, preferably less than 0.40 mass%, and more preferably less than 0.35 mass%.

(Pb)

In embodiments of the present invention, machinability is improved by β phase including Si, P, and in which P-containing compounds are present. Further, by including a small amount of Pb, excellent machinability as a copper alloy casting can be achieved. By causing Pb to be present in the form of fine Pb particle in the metallographic structure where β phase having excellent machinability is present, Pb exhibits its effects of improving chip breakability and reducing cutting resistance. In an alloy composition according to an embodiment of the present invention, about 0.001 mass% Pb is solid-solubilized in the matrix, and the amount of Pb in excess of about 0.001 mass% is present in the form of Pb particles having a diameter of about 0.1 to about 3 μm. When the Pb content is higher than 0.002 mass%, the effects are exhibited. The Pb content is higher than 0.002 mass%, preferably higher than 0.010 mass%, and more preferably higher than 0.020 mass%.

On the other hand, Pb is significantly effective as a means for improving the machinability of copper alloy castings but is harmful to human body and the environment. Therefore, the Pb content is required to be lower than 0.25 mass%, preferably lower than 0.20 mass%, more preferably lower than 0.15 mass%, and still more preferably 0.10 mass% or lower.

(Bi)

About 0.001 mass% Bi is solid-solubilized in the matrix, and the amount of Bi that exceeds about 0.001 mass% is present in the form of particles having a diameter of about 0.1 to about 3 μm. In embodiments of the present invention, the objective is to obtain excellent machinability with the content of Pb, a substance that is harmful to human body, limited to lower than 0.25 mass%, preferably lower than 0.20 mass%, more preferably lower than 0.15 mass%, and still more preferably 0.10 mass% or lower. It is known that Bi has a lower effect on machinability than Pb. However, it was found that, by adding Bi together with Pb, Bi exhibits substantially the same effect as Pb or, in some cases, higher effect than Pb on machinability. When Bi is contained in the presence of Pb, Pb and Bi are present together in most part, and the effect of particles in which Pb and Bi are present together on machinability is less impaired than that of Bi particles or Pb particles. The influence of Bi on the environment and human body is yet to be known at present but is presumed to be less than Pb. Therefore, by reducing the Pb content by including Bi, the influence on the environment and human body will be reduced. In addition, in the embodiments, due to the action of Si, it is possible to make particles containing Bi preferentially present in α phase, and in turn, the machinability of α phase is improved. This means the machinability of copper alloy casting can be improved by a different means.

That is, if the number of particles including Bi that are present in α phase increases, the machinability of α phase is improved, and eventually, the effect of improving the machinability by the particles including Bi comes to exceed the machinability improvement effect of Pb particles. In a copper alloy casting according to an embodiment of the present invention, immediately after solidification, α phase is not present, and the proportion of β phase is 100%. As the temperature decreases, specifically, in the process of cooling from about 850°C to about 600°C, α phase precipitates from β phase. At this time, particles including Bi is a melt (liquid). In the case of a Cu-Zn alloy not including Si, when α phase precipitates, Bi particles are present either in β phase or at a boundary between α phase that has precipitated and β phase, and scarcely present in α phase. On the other hand, as described above, when the Cu-Zn alloy includes Si, particles including Bi are likely to be present in α phase due to the action of Si.

Bi is included as an optional element and is not required to be included. When Bi is included and its content is 0.001 mass% or higher, the effect is exhibited due to the presence of Pb. Bi's position is mainly a replacement for Pb. On the other hand, when the Bi content exceeds 0.020 mass%, particles including Bi start to be present in α phase, causing the machinability of α phase to be improved, which further improves the machinability of the alloy. In addition, the Bi content is preferably 0.030 mass% or higher under harsh cutting conditions such as (1) the cutting speed is high; (2) the feed rate is high; (3) the cutting depth when turning is deep; and (4) the diameter of a hole to drill is large. On the other hand, Bi has a characteristic of embrittling copper alloy castings. The upper limit of Bi is 0.100 mass% or lower and preferably 0.080 mass% or lower in consideration of its influence on the environment and human body and likely problems of deterioration in the ductility and the toughness of copper alloy casting, and cracking that may occur during production of the casting.

(Inevitable Impurities, in particular, Fe, Mn, Co, and Cr; Sn and Al)

Examples of the inevitable impurities in an embodiment of the present invention include Mn, Fe, Al, Ni, Mg, Se, Te, Sn, Co, Ca, Zr, Cr, Ti, In, W, Mo, B, Ag, and rare earth elements.

Conventionally, a free-cutting copper alloy, in particular, free-cutting brass including higher than or equal to about 30 mass% Zn is not mainly formed of quality raw material such as electrolytic copper or electrolytic zinc but is mainly formed of recycled copper alloy. In preliminary steps (downstream step, working step) in this field of art, machining is performed on almost all the parts and components, during which a large amount of copper alloy accounting for 40 to 80 % of the material is disposed of. Examples of such disposed copper alloy include chips, mill ends, burrs, runners, and products having production defects. These disposed copper alloys are the main raw material. If cutting chips, mill ends, and the like are not properly separated, Pb, Fe, Mn, Si, Se, Te, Sn, P, Sb, As, Bi, Ca, Al, Zr, Ni, and/or rare earth elements mix in as part of a raw material from a leaded free-cutting brass, a free-cutting copper alloy not containing Pb but containing Bi or the like, a special brass alloy including Si, Mn, Fe, and Al, or other copper alloys. In addition, cutting chips include Fe, W, Co, Mo, and the like which originate from tools. Wasted materials include plated products, and thus Ni, Cr, and Sn mix in.

In addition, Mg, Sn, Fe, Cr, Ti, Co, In, Ni, Se, and Te are mixed into pure copper-based scrap that is used instead of electrolytic copper. Brass-based scraps that are used instead of electrolytic copper or electrolytic zinc are often plated with Sn, resulting in contamination by a high concentration of Sn.

From a viewpoint of reuse of resources and costs, scraps including these elements are used as a raw material to the extent that there is no bad influence on the properties at least. In a leaded JIS free-cutting brass bar, C3604 (JIS H 3250), including about 3 mass% Pb as an essential element, Fe may be contained up to 0.5 mass% and Fe + Sn (the total content of Fe and Sn) may be contained up to 1.0 mass% as impurities.

In a leaded JIS standard brass casting (JIS H 5120), about 2 mass% Pb is contained as an indispensable element, the upper limits of the remaining components are 0.8 mass% for Fe, 1.0 mass% or less for Sn, 0.5 mass% for Al, and 1.0 mass% or less for Ni. Actually, some free-cutting brass bar and brass casting contain Fe, Sn, Al, or Ni at a high concentration that is close to the upper limit defined by JIS standards.

Fe, Mn, Co, and Cr are solid-solubilized in $\alpha$ phase, $\beta$ phase, and $\gamma$ phase of a Cu-Zn alloy to a certain concentration. However, if Si is present then, Fe, Mn, Co, and Cr are likely to compound with Si. Fe, Mn, Co, and Cr may combine with Si potentially resulting in consumption of Si, an element that is effective for machinability. Fe, Mn, Co, or Cr that is compounded with Si forms a Fe-Si compound, an Mn-Si compound, a Co-Si compound, or a Cr-Si compound in the metallographic structure. Since these intermetallic compounds are extremely hard, cutting resistance increases, and the tool life decreases. In addition, when the content of Fe, Mn, Co, or Cr is high, these elements can be combined with P-containing compound, which may cause the composition of the P-containing compound to change, and the original function of P-containing compound may be impaired. Therefore, the content of each of Fe, Mn, Co, and Cr is required to be limited to preferably lower than 0.30 mass%, more preferably lower than 0.20 mass%, and still more preferably 0.15 mass% or lower. In particular, the total content of Fe, Mn, Co, and Cr is required to be limited to lower than 0.45 mass%, preferably lower than 0.40 mass%, more preferably lower than 0.35 mass%, and still more preferably 0.25 mass% or lower.

On the other hand, Sn and Al mixed in from free-cutting brass, plated waste products, or the like promote formation of $\gamma$ phase in an alloy according to an embodiment of the present invention, which is seemingly effective for machinability. However, as the contents of Sn and Al increase, the inherent characteristics of $\gamma$ phase comprising Cu, Zn, and Si gradually change. In addition, larger amounts of Sn and Al are distributed in $\beta$ phase than in $\alpha$ phase and gradually change characteristics of $\beta$ phase. As a result, the alloy's ductility, toughness, or machinability may deteriorate. Therefore, it is necessary to limit the contents of Sn and Al, too. The Sn content is preferably lower than 0.40 mass%, more preferably lower than 0.30 mass%, and still more preferably 0.25 mass% or lower. The Al content is preferably lower than 0.20 mass%, more preferably 0.15 mass% or lower, and still more preferably 0.10 mass% or lower. In particular, from a viewpoint of influence on machinability, ductility, and human body, the total content of Sn and Al is required to be limited to lower than 0.45 mass%, preferably to lower than 0.40 mass%, more preferably to lower than 0.35 mass%, and still more preferably to 0.25 mass% or lower.

As other main inevitable impurity elements, empirically speaking, in many cases, Ni often mixes in from scraps and the like, but the influence on properties is less than that of Fe, Mn, Sn and the like. The Ni content is preferably lower than 0.3 mass% and more preferably lower than 0.2 mass%. It is not necessary to particularly limit the content of Ag because Ag is commonly considered as Cu and does not substantially affect various properties of an alloy. Nevertheless, the Ag content is preferably lower than 0.1 mass%. Te and Se themselves have free-cutting characteristics, and contamination by a large amount of Te or Se may occur although it is rare. In consideration of influence on ductility or impact resistance, each content of Te and Se is preferably lower than 0.2 mass%, more preferably 0.05 mass% or lower, and still more preferably 0.02 mass% or lower. In addition, corrosion-resistant brass includes As and/or Sb in order to improve its corrosion resistance. In consideration of influence on ductility and impact resistance, each content of As and Sb is preferably lower than 0.05 mass% and 0.02 mass% or lower respectively.

The content of each of Mg, Ca, Zr, Ti, In, W, Mo, B, and rare earth elements as other elements is preferably lower than 0.05 mass%, more preferably lower than 0.03 mass%, and still more preferably lower than 0.02.

Incidentally, the content of the rare earth elements refers to the total content of one or more of the following elements: Sc, Y, La, Ce, Pr, Nd, Pm, Sm, Eu, Gd, Tb, Dy, Ho, Er, Tm, Tb, and Lu.

Accordingly, the total content of the inevitable impurities is preferably lower than 1.0 mass%, more preferably lower than 0.8 mass%, and still more preferably lower than 0.7 mass%.

```
(Composition Relational Expression f1)

Composition Relational Expression f1 = [Cu] - 5 × [Si] + 0.5 × [Pb] + 0.5 × [Bi] - 0.5 × [P]
```

When Bi is not included, [Bi] in f1 is 0. Therefore, the expression reads as follows: f1 = [Cu] - 5 × [Si] + 0.5 × [Pb] - 0.5 × [P].

The composition relational expression f1 is an expression indicating a relationship between the composition and the metallographic structure. Even when the amount of each of the elements is in the above-described defined range, unless this composition relational expression f1 is not satisfied, the properties targeted in embodiments of the present invention cannot be obtained. When f1 is lower than 56.0, the proportion of $\beta$ phase increases, and the ductility and the toughness decline even if the production process is modified. Accordingly, the lower limit of f1 is 56.0 or higher, preferably 56.3 or higher, and more preferably 56.5 or higher. As the composition becomes more preferable within the defined range of f1, the proportion of $\alpha$ phase increases, excellent machinability can be maintained, and good impact resistance can be obtained.

On the other hand, the upper limit of the composition relational expression f1 affects the proportion of $\beta$ phase or the proportion of $\gamma$ phase. When the composition relational expression f1 is higher than 59.5, the proportion of $\beta$ phase decreases, and excellent machinability cannot be obtained. At the same time, the proportion of $\gamma$ phase increases, the toughness and the ductility decrease, and the strength also decreases. In some cases, $\mu$ phase also appears. In addition, the upper limit of f1 relates to castability, and when f1 exceeds the upper limit, the number of defects present in the finally solidified portion increases. Further, castability and the solidification temperature range are closely related, and when the solidification temperature range is wide, the castability deteriorates. When f1 exceeds the upper limit, the solidification temperature range exceeds 25°C, and the number of defects present in the finally solidified portion increases. Accordingly, the upper limit of f1 is 59.5 or lower, preferably 59.2 or lower, more preferably 59.0 or lower, and still more preferably 58.5 or lower. Although depending on the composition or the process, as the value of f1 decreases, the amount of $\beta$ phase increases, the machinability improves, the strength increases, the solidification temperature range narrows, and the castability improves.

Free-cutting copper alloy castings according to an embodiment of the present invention have machinability, a property that requires a kind of brittleness obtained by decreasing cutting resistance so that finely broken chips are generated. The castings also have toughness and ductility, properties that are completely opposite to machinability. By discussing not only the composition but also the composition relational expression f1, the metallographic structure relational expressions f2 to f6 and the metallographic structure and composition relational expression f6A, which will be described later, in detail, an alloy more suitable for intended purpose and use can be provided. Incidentally, Sn, Al, Cr, Co, Fe, Mn, and inevitable impurities, that are separately defined, are not defined by the composition relational expression f1 because their influence on the composition relational expression f1 is small if the content is within the range that can be treated as inevitable impurities.

(Composition Relational Expression f0)

When Bi is included, expressions are defined as follows.

## Composition Relational Expression f0 = [Pb] + [Bi]

In terms of machinability improvement of a copper alloy casting, Bi can be evaluated to have an effect equivalent to that of Pb, and may be optionally included as a replacement for Pb. To that end, f0 that is the sum of [Pb] and [Bi] is required to exceed 0.003. f0 is preferably 0.010 or higher, more preferably 0.020 or higher, and still more preferably 0.040 or higher. In particular, f0 is preferably 0.040 or higher and more preferably 0.050 or higher under harsh cutting conditions such as (1) the cutting speed is high; (2) the feed rate is high; (3) the cutting depth when turning is deep; (4) the diameter of a hole to drill is large; and (5) the drill depth is deep. At the same time, it is preferable that the Bi content exceeds 0.020 mass% and particles including Bi are present in $\alpha$ phase.

On the other hand, the influence of Bi on the environment or human body is unclear at present. Even if a part of Pb is replaced with Bi, f0 still needs to be lower than 0.25. f0 is preferably lower than 0.20 and more preferably lower than 0.18. Even when the total content of Pb and Bi is lower than 0.18 mass%, by satisfying f1 and relational expressions f2 to f6 and f6A described below, a copper alloy casting having excellent machinability can be obtained.

(Comparison with Patent Documents)

Here, the results of comparison between the compositions of the Cu-Zn-Si alloys described in Patent Documents 2 to 15 and the compositions of copper alloy castings according to embodiments of the present invention are shown in Tables 1 and 2.

The embodiments and the alloys disclosed by Patent Documents 2 to 10 are different from each other in the contents of Cu and Si, the main elements of the alloys. In Patent Documents 2 to 10, a large amount of Cu is required.

In Patent Documents 2 to 4, 6, 9, and 10, $\beta$ phase is depicted as a metallic phase that is not preferable to be present in a metallographic structure because it impairs machinability. In the machinability relational expressions, $\beta$ phase is expressed as a negative phase (a phase to which a negative coefficient is allocated). It is also disclosed that when $\beta$ phase is present, it is preferable that $\beta$ phase changes into $\gamma$ phase having excellent machinability through heat treatment.

Patent Documents 4, 9, and 10, in which an allowable amount of $\beta$ phase is described, disclose that the amount of $\beta$ phase is 5% or less at the maximum.

In Patent Document 11, the content of each of Sn and Al is at least 0.1 mass% or higher in order to improve dezincification corrosion resistance, and large amounts of Pb and Bi are required to be included in order to obtain excellent machinability.

Patent Document 12 discloses a copper alloy casting having corrosion-resistance which requires higher than or equal to 65 mass% Cu and has excellent mechanical characteristics and castability achieved by including Si and a small amount of Al, Sb, Sn, Mn, Ni, B, or the like.

Patent Document 13 discloses that P is not included.

Patent Document 14 discloses that Bi is not included, higher than or equal to 0.20 mass% Sn is contained, the material is held at a high temperature of 700°C to 850°C, and subsequently hot extrusion is performed.

In Patent Document 15, in order to improve dezincification corrosion resistance, higher than or equal to 1.5 mass% Sn is contained. In addition, in order to obtain machinability, a large amount Bi is required.

Further, none of these Patent Documents disclose or imply any of the essential requirements of the embodiments that are $\beta$ phase including Si has excellent machinability, $\beta$ phase is required in an amount at least 18% or higher, fine P-containing compounds are present in $\beta$ phase, and particles containing Bi are present in $\alpha$ phase which is the third embodiment of the present invention.

Table 1

| | Cu | Si | P | Pb | Bi | Sn | Al | Others |
|---|---|---|---|---|---|---|---|---|
| First Embodiment | 58.5-65.0 | 0.40-1.40 | 0.003-0.19 | 0.002-0.25 | 0.001-0.100 Optional | Sn+Al<0.45, Fe+Mn+Cr+Co<0.45 | | |
| Second Embodiment | 59.0-65.0 | 0.50-1.35 | 0.010-0.15 | 0.010-0.20 | 0.001-0.100 Optional | Sn+Al<0.40, Fe+Mn+Cr+Co<0.40 | | |
| Third Embodiment | 59.5-64.5 | 0.60-1.30 | 0.020-0.14 | 0.010-0.15 | 0.020-0.100 | Sn+Al<0.35, Fe+Mn+Cr+Co<0.35 | | |
| Patent Document 1 | 59.5-66.0 | - | - | - | 0.5-2.0 | 0.7-2.5 | - | - |
| Patent Document 2 | 69-79 | 2.0-4.0 | 0.02-0.25 | - | 0.02-0.4 | 0.3-3.5 | 1.0-1.5 | - |
| Patent Document 3 | 69-79 | 2.0-4.0 | 0.02-0.25 | 0.02-0.4 | 0.02-0.4 | 0.3-3.5 | 0.1-1.5 | - |
| Patent Document 4 | 71.5-78.5 | 2.0-4.5 | 0.01-0.2 | 0.005-0.02 | 0.01-0.2 | 0.1-1.2 | 0.1-2.0 | - |
| Patent Document 5 | 69-88 | 2-5 | 0.01-0.25 | 0.004-0.45 | 0.004-0.45 | 0.1-2.5 | 0.02-1.5 | Zr:0.0005-0.04 |
| Patent Document 6 | 69-88 | 2-5 | 0.01-0.25 | 0.005-0.45 | 0.005-0.45 | 0.05-1.5 | 0.02-1.5 | Zr:0.0005-0.04 |
| Patent Document 7 | 74.5-76.5 | 3.0-3.5 | 0.04-0.10 | 0.01-0.25 | 0.01-0.4 | 0.05-0.2 | 0.05-0.2 | Fe:0.11-0.2 |
| Patent Document 8 | 70-83 | 1-5 | 0.1 or less | - | - | 0.01-2 | - | Fe,Co:0.01-0.3 Ni:0.01-0.3 Mn:0.01-0.3 |
| Patent Document 9 | 73.5-79.5 | 2.5-3.7 | 0.015-0.2 | 0.003-0.25 | 0.003-0.30 | 0.03-1.0 | 0.03-1.5 | - |
| Patent Document 10 | 75.4-78.0 | 3.05-3.55 | 0.05-0.13 | 0.005-0.070 | 0.005-0.10 | 0.05 or less | 0.05 or less | - |
| Patent Document 11 | 55-75 | 0.01-1.5 | less than 0.15 | 0.01-4.0 | 0.01-4.0 | 0.1 or more | 0.1 or more | - |
| Patent Document 12 | 65-75 | 0.5-2.0 | - | - | - | 0.01-0.55 | 0.1-1.0 | - |
| Patent Document 13 | - | 0.25-3.0 | - | - | - | - | - | - |
| Patent Document 14 | 60.0-66.0 | 0.01-0.50 | 0.15 or less | 0.05-0.50 | - | 0.20-0.90 | - | Fe:0.60 or less |
| Patent Document 15 | 61.0-63.0 | 0.05-0.30 | 0.04-0.15 | 0.01 or less | 0.5-2.5 | 1.5-3.0 | - | Sb:0.02-0.10 |

Table 2

| | Metallographic Structure | | | |
|---|---|---|---|---|
| First Embodiment | 20≤α≤80, 18≤β≤80, 0≤γ<5 | | | |
| Second Embodiment | 25≤α≤75, 25≤β≤75, 0≤γ<3 | | | |
| Third Embodiment | 30≤α≤70, 30≤β≤70, 0≤γ<2 | | | |
| Patent Document 1 | α+γ structure or α+β+γ structure | | | |
| Patent Document 2 | γ phase, in some cases, κ phase is present. β phase is turned into γ phase by heat treatment. | | | |
| Patent Document 3 | γ phase, in some cases, κ phase is present. β phase is turned into γ phase by heat treatment. | | | |
| Patent Document 4 | 18-500Pb≤κ+γ+0.3μ-β≤56+500Pb, 0≤β≤5 | | | |
| Patent Document 5 | α+κ+γ≥80 | | | |
| Patent Document 6 | α+γ+κ≥85, 5≤γ+κ+0.3μ-β≤95 | | | |
| Patent Document 7 | - | | | |
| Patent Document 8 | - | | | |
| Patent Document 9 | 60≤α≤84, 15≤κ≤40, β≤2, etc. | | | |
| Patent Document 10 | 29≤κ≤60, β=0, etc. κ phase is present in α phase. | | | |
| Patent Document 11 | - | | | |
| Patent Document 12 | - | | | |
| Patent Document 13 | - | | | |
| Patent Document 14 | - | | | |
| Patent Document 15 | - | | | |

<Metallographic Structure>

In a Cu-Zn-Si alloy, 10 or more kinds of phases are present, a complicated phase change occurs, and desired properties cannot be necessarily obtained simply by satisfying the composition ranges and the relational expressions of the elements. It was empirically known that the metallographic structure of a Cu-Zn-Si alloy casting is more deviated from an equilibrium state regarding constitution of the phases that appear and the proportions of the phases than that of a copper alloy subjected to hot working such as hot extrusion. In addition, even if two castings are made of an alloy having the same composition, the amounts of β and γ phases significantly vary between them depending on the cooling rate in the production process of castings. By specifying and determining the kinds of metallic phases present in the metallographic structure and their area ratio ranges, desired properties can be obtained in the end. Accordingly, the following metallographic structure relational expressions are defined.

$$20 \leq f2 = (\alpha) \leq 80$$

$$18 \leq f3 = (\beta) \leq 80$$

$$0 \leq f4 = (\gamma) < 5$$

$$f5 = 20 \times (\gamma) / (\beta) < 4$$

$$18 \leq f6 = (\gamma)^{1/2} \times 3 + (\beta) \times (-0.5 \times [Si]^2 + 1.5 \times [Si])$$

$$\leq 82$$

($\gamma$ Phase, Metallographic Structure Relational Expression f4)

As described in Patent Documents 2 to 6, 9, and 10, $\gamma$ phase is a phase that contributes most to machinability in a Cu-Zn-Si alloy in which the Cu concentration is about 69 mass% to about 80 mass% and the Si concentration is about 2 to 4 mass%. In embodiments of the present invention also, $\gamma$ phase was confirmed to be contributing to machinability. However, it is necessary to reduce $\gamma$ phase in order to obtain a good balance between ductility and strength. Specifically, when the proportion of $\gamma$ phase is 5% or higher, excellent ductility or toughness cannot be obtained. Even when the amount of $\gamma$ phase is small, $\gamma$ phase exhibits an effect of improving chip breakability in drilling. However, when a large amount of $\gamma$ phase is present, thrust resistance value in drilling increases since $\gamma$ phase is hard. Providing that $\beta$ phase is present at a proportion of 18% or higher (in terms of area ratio; hereinafter, the unit for the amount of phase shall be area ratio), the effect of $\gamma$ phase on machinability corresponds to the value obtained by raising the amount of $\gamma$ phase to the power of 1/2. When a small amount of $\gamma$ phase is included, $\gamma$ phase has a large effect on improving machinability. However, when the amount of $\gamma$ phase is increased, the effect of improving machinability decreases. In consideration of ductility and cutting resistance in drilling and turning, the amount of $\gamma$ phase needs to be lower than 5%. The amount of $\gamma$ phase is preferably lower than 3% and more preferably lower than 2%. When the amount of $\gamma$ phase is lower than 2%, the influence on toughness is reduced. Even when $\gamma$ phase is not present, that is, ($\gamma$) = 0, excellent machinability can be obtained by causing $\beta$ phase including Si to be present at a proportion described below and also causing the alloy to contain Pb, and Bi as an optional element.

($\beta$ phase, Metallographic Structure Relational Expressions f3 and f5)

In order to obtain excellent machinability with an amount of $\gamma$ phase less than those disclosed by the Patent Documents and without $\kappa$ phase or $\mu$ phase, it is important to optimize the Si content, the blending ratio between Cu and Zn, the amount of $\beta$ phase, and the amount of Si solid-solubilized in $\beta$ phase. Incidentally, it should be noted that $\beta$ phase includes $\beta'$ phase.

$\beta$ phase of an alloy whose composition falls within a composition range according to an embodiment of the present invention has lower ductility than $\alpha$ phase, but has much higher toughness and ductility than $\gamma$ phase, a phase whose ductility and toughness are poor. Compared with $\kappa$ phase or $\mu$ phase, it also has higher toughness and ductility. Accordingly, from a viewpoint of toughness and ductility, a relatively large amount of $\beta$ phase can be included. In addition, $\beta$ phase can obtain excellent conductivity although it includes high concentrations of Zn and Si. The amounts of $\beta$ phase and $\gamma$ phase are significantly affected not only by the composition but also by the process though.

In a Cu-Zn-Si-P-Pb alloy or a Cu-Zn-Si-P-Pb-Bi alloy casting according to an embodiment of the present invention, in order to obtain excellent machinability while minimizing the content of Pb, $\beta$ phase is required in an amount of 18% or higher at least, and also, the amount of $\beta$ phase needs to be more than five times the amount of $\gamma$ phase in order to obtain good ductility and high strength. That is, it is necessary to satisfy f5 = 20 $\times$ ($\gamma$) / ($\beta$) < 4 (a converted form of f5: 5 $\times$ ($\gamma$) < ($\beta$)). The area ratio of $\beta$ phase is preferably 25% or higher, more preferably 30% or higher. Even when the amount of $\gamma$ phase is less than 3%, or further, less than 2%, excellent machinability can be obtained. When the amount of $\gamma$ phase is less than 3%, or further, less than 2% and the amount of $\beta$ phase is more than 10 times, or further, 20 times the amount of $\gamma$ phase, better ductility and toughness as well as high strength can be obtained. That is, it is necessary to satisfy f5 = 20 $\times$ ($\gamma$) / ($\beta$) < 2 (when f5 is converted, 10 $\times$ ($\gamma$) < ($\beta$)) or f5 = 20 $\times$ ($\gamma$) / ($\beta$) < 1. When the amount of $\gamma$ phase is 0%, the amount of $\beta$ phase is preferably 25% or higher, more preferably 30% or higher, and still more preferably 40% or higher. Even when the proportion of $\beta$ phase is about 50% and the proportion of $\alpha$ phase, which is a phase having low machinability, is about 50%, the machinability of the alloy is maintained at a high level. In free-cutting copper alloy castings according to an embodiment of the present invention, obtaining excellent corrosion resistance or dezincification corrosion resistance is not aimed at. It is true that the corrosion resistance of $\alpha$ phase and $\beta$ phase is improved by solid solubilization of Si in $\alpha$ phase and $\beta$ phase, and the alloy castings exhibit better corrosion resistance than a free-cutting brass C3604 or a brass for forging C3771 not including Si and including $\beta$ phase. However, their corrosion resistance level is not as high as that disclosed by the above-mentioned Patent Documents.

When an alloy contains P, and the proportion of $\gamma$ phase in the alloy is 0% or lower than 2%, and the amount of $\beta$ phase is about 40% or higher, the alloy has the machinability of a $\beta$ single-phase alloy in which P-containing compounds are present. It is presumed that soft $\alpha$ phase functions as a cushioning material around $\beta$ phase, or a phase boundary between soft $\alpha$ phase and hard $\beta$ phase functions as an origin of chip breakage. Even when the amount of $\beta$ phase is about 40% to about 50%, excellent machinability, that is, low cutting resistance is maintained, and chip breakability is improved in some cases. However, when the amount of β phase is reduced to about 18% to about 30%, the characteristics of α phase become predominant, and when the amount of β phase is reduced to about 25%, machinability starts to deteriorate.

On the other hand, β phase has poorer ductility and toughness than α phase. As the proportion of β phase decreases, ductility improves. In order to obtain excellent ductility and improve the balance between strength, ductility, and toughness, the proportion of β phase is required to be 80% or lower, preferably 75% or lower, and more preferably 70% or lower. When toughness and ductility are important, the proportion of β phase is preferably 60% or lower. The appropriate proportion of β phase slightly varies depending on the intended purpose of use and application.

β phase has a characteristic in which ductility is excellent at a high temperature. When a copper alloy casting including Pb or Bi is cooled to a room temperature after solidification, Pb or Bi is present in a molten state until the casting's temperature reaches about 300°C. Therefore, cracking is likely to occur due to thermal strain or the like. In particular, Bi has a significant influence. In that case, if soft β phase having excellent ductility at a high temperature is present at a proportion of at least 18% or higher, preferably 25% or higher, cracking sensitivity caused by Pb or Bi, a metal having low melting point, can be reduced. Basically, the amount of β phase present is larger at a high temperature than at a normal temperature. Therefore, the larger the amount of β phase at a normal temperature, the lower the cracking sensitivity during casting.

(Si Concentration and Machinability of β Phase)

In a composition range of an embodiment of the present invention, the higher the Si content solid-solubilized in β phase, the better the machinability. As a result of diligent study on the relationship between the Si concentration in the alloy, the amount of β phase, and the machinability of the alloy, it was revealed that, when Si concentration (mass%) is represented by [Si] for facility and convenience, the machinability of the alloy is well expressed by multiplying the amount of β phase by ($-0.5 \times [Si]^2 + 1.5 \times [Si]$). That is, when two β phases are compared, one containing Si at a higher concentration has higher machinability. This means that, for example, an alloy whose Si concentration is 1.0 mass% requires 1.08 times the amount of β phase contained in an alloy whose Si concentration is 1.2 mass%. It should be noted, however, that the machinability improvement effect of β phase is saturated when the Si concentration in the alloy is between about 1.3 mass% and about 1.5 mass%. Once the Si concentration exceeds about 1.5 mass%, the machinability of β phase deteriorates rather than improves, and the higher the Si concentration, the lower the machinability of β phase.

On the other hand, the Si concentration in β phase needs to exceed at least 0.5 mass% to exhibit an effect on machinability. The Si concentration in β phase is preferably higher than 0.7 mass% and more preferably 1.0 mass% or higher. When the Si concentration in β phase is about 1.6 mass%, the effect on machinability starts to be saturated. When the Si concentration in β phase exceeds about 1.8 mass%, β phase becomes harder and embrittled, and the machinability improvement effect starts to disappear. Accordingly, the upper limit of the Si concentration in β phase is 1.8 mass%.

(β Phase, Metallographic Structure Relational Expression f6)

In addition to the metallographic structure relational expressions f3 to f5, in order to obtain comprehensively excellent machinability, ductility, and strength, the metallographic structure relational expression f6 is expressed by assigning coefficients to the proportions of γ phase and β phase, respectively. As described above, γ phase has an excellent effect on chip breakability in drilling even if its content is small. Therefore, a coefficient of 3 is multiplied by the amount of γ phase raised to the power of 1/2. Regarding β phase, importance is placed on the Si concentration of the alloy. Therefore, the amount of β phase is multiplied by ($-0.5 \times [Si]^2 + 1.5 \times [Si]$), then the value obtained by multiplying a coefficient of 3 by the amount of γ phase raised to the power of 1/2 is added, which is expressed as the metallographic structure relational expression f6 for obtaining machinability. The metallographic structure relational expression f6 is important, but does not come into effect unless the afore-mentioned composition relational expressions f0 and f1 and the metallographic structure relational expression f2 to f5 are satisfied. The lower limit value of the metallographic structure relational expression f6 for obtaining excellent machinability is 18 or higher, preferably 25 or higher, and more preferably 30 or higher. When machinability is important, the lower limit value of the metallographic structure relational expression f6 is preferably 40 or higher. On the other hand, in consideration of properties such as toughness, ductility, or strength, the upper limit value of the metallographic structure relational expression f6 is 82 or lower, preferably 76 or lower, and more preferably 70 or lower.

Incidentally, in the expressions f0 to f6, α phase, β phase, γ phase, δ phase, ε phase, ζ phase, η phase, κ phase, μ phase, and χ phase are the subject metallic phases, and intermetallic compounds excluding P-containing compounds, Pb particles, oxides, non-metallic inclusions, non-melted materials, and the like are not their subjects. P-containing compounds are mostly present in β phase or at a boundary between α phase and β phase. Therefore, it is assumed that β phase includes the P-containing compounds present in β phase or at a boundary between α phase and β phase. Should any P-containing compounds be present in α phase although it is rare, it is assumed that such compounds are included in α phase. On the other hand, Intermetallic compounds that are formed by Si, P, and/or inevitably mixed-in elements (for example, Fe, Mn, Co, and Cr) are outside the scope of the calculation of the area ratios of metallic phases. In embodiments of the present invention, precipitates and metallic phases having a size that can be observed with a metallographic microscope having a magnification power of 500x or distinguished and recognized with a metallographic microscope having a magnification power of about 1000x are the subjects of the area ratio calculation. Accordingly, the minimum size of a precipitate or metallic phase that can be observed is about 0.5 μm. For example, γ phase having a size of 0.1 to 0.4 μm that is less than about 0.5 μm can be present in β phase. However, since such γ phase cannot be recognized with a metallographic microscope, it is regarded as β phase.

(Metallographic Structure and Composition Relational Expression f6A)

As a conditional expression for having an alloy obtain good machinability, it is necessary to add the effects of Pb, Bi, and P for improving machinability through their respective actions to the metallographic structure relational expression f6. Under a condition where P-containing compounds are present in β phase including Si, as the amount of P solid-solubilized in β phase increases, or as the amount of P-containing compounds increases, the machinability improves, and when P-containing compounds begin to be observed with a metallographic microscope, machinability further improves. If Pb is contained, even if the content is very small amount, machinability improves. Bi has substantially the same effect as Pb, and when particles including Bi are present in α phase, machinability further improves. As a result of diligent study, it was found that the degree of machinability improvement brought by Pb, Bi, and P has a deep relationship with the value obtained by raising the Pb content, the total content of Pb and Bi, or the P content to the power of 1/2. It is presumed that, as described above, Bi has the same effect as Pb in a simple term and can be represented by Pb + Bi. That is, Pb, Pb + Bi, or P exhibits a significant effect even if the amount contained is very small, and as the content increases, the effect of improving machinability increases. However, the degree of the improvement gradually becomes mild.

In summary, the Si concentration in β phase, the amount of β phase, the amount of P solid-solubilized in β phase, the amount of P-containing compounds present in β phase, the content of Pb present as fine particles, and the content of Pb + Bi effect improvement of the machinability of the alloy through their respective actions. When all the requirements are satisfied, a large effect of improving machinability is exhibited due to a synergistic action, and the machinability of the copper alloy casting is significantly improved by including Pb, Pb + Bi, or P even if the amount contained is very small.

In the metallographic structure and composition relational expression f6A, the value obtained by multiplying a coefficient of 38 by the Pb content or the content of Pb + Bi ([Pb] or [Pb] + [Bi]) raised to the power of 1/2 and the value obtained by multiplying a coefficient of 15 by the P content (mass%, [P]) raised to the power of 1/2 are added to f6, the effect representing the machinability of β phase. In order to obtain good machinability, f6A is at least 33 or higher, preferably 40 or higher, more preferably 45 or higher, and still more preferably 50 or higher. Even when the metallographic structure relational expression f6 is satisfied, unless f6A in which the effects of Pb or Pb + Bi and P are added is satisfied, good machinability cannot be obtained. Incidentally, as long as the contents of Pb or Pb + Bi and P are within the ranges defined by an embodiment of the present invention, the influence on ductility or the like is not required to be defined by f6A since it is defined by the upper limit of the relational expression f6. Besides, even when the value of f6 is relatively low, the machinability improves if the contents of Pb, Pb + Bi, and/or P are increased. Further, under harsh cutting conditions such as (1) the cutting speed is high, (2) the feed rate is high, (3) the cutting depth when turning is deep, (4) the diameter of a hole to drill is large, or (5) the drill depth is deep, it is effective to increase the value of f6A. In particular, it is preferable to increase the term Pb or Pb + Bi in f6A.

Incidentally, f6 and f6A are only applicable when each element is within the concentration range defined by an embodiment of the present invention and f0 to f5 are also satisfied.

(α phase, Metallographic Structure Relational Expression f2)

α phase is a main phase forming the matrix together with β phase or γ phase. α phase including Si indicates higher machinability index than α phase without Si but only by 3 to 10 percentage points. However, as the Si content increases, machinability improves. When β phase accounts for 100%, there is a problem in the ductility and the toughness of the alloy. Therefore, an appropriate amount of α phase is required. Even if a β single-phase alloy comes to include a relatively large amount of α phase, the machinability of the β single-phase alloy is maintained under appropriate conditions. For example, even when α phase is contained at about 50% in terms of area ratio, it is considered that α phase itself functions as a cushioning material such that boundaries between α phase and hard β phase become stress concentration source during machining. As a result, chips are broken, excellent machinability that a β single-phase alloy has is maintained, and machinability is improved in some cases.

As a result of a series of diligent study, it was found that the amount of α phase is required to be 20% or higher, preferably 25% or higher, more preferably 30% or higher, and still more preferably 35% or higher considering the ductility, the toughness, and the balance between ductility and strength of the alloy. When toughness is important, it is preferable that α phase is 40% or higher. On the other hand, in order to obtain good machinability, the upper limit of the amount of α phase is 80% or lower, preferably 75% or lower, and more preferably 70% or lower. When machinability is important, the amount of α phase is preferably 60% or lower.

(μ Phase, κ Phase, and Other Phases)

In order to obtain high ductility, toughness, and strength together with excellent machinability, presence of phases other than α, β, and γ phases is also important. In embodiments of the present invention, considering the properties of the alloy, κ phase, μ phase, δ phase, ε phase, ζ phase, or η phase is not particularly required. When the sum of the constituent phases (α), (β), (γ), (μ), (κ), (δ), (ε), (ζ), and (η) that form the metallographic structure is represented by 100, it is preferable that (α) + (β) + (γ) >99, and it is most preferable that (α) + (β) + (γ) = 100 providing that measurement error and number rounding (rounding off) are disregarded.

(Presence of P-containing Compound)

By including Si, the machinability of β phase is significantly improved, and the machinability is further improved by including P and solid-solubilization of P in β phase. Further, by causing a compound formed with P having a particle size of about 0.3 to about 3 μm and Si and/or Zn to be present in β phase, the machinability of β phase can be further improved. Machinability of a β single-phase alloy including 0.01 mass% Pb, 0.05 mass% P, and about 1 mass% Si is improved by about 10 % points if described simply in terms of machinability index as compared to a β single-phase alloy to which P is not added by the presence of a sufficient amount of P-containing compounds.

The machinability is also affected by the P content and the amount and size of the P-containing compounds to be formed. P-containing compound is a compound including P and at least either or both of Si and Zn. In some cases, it can further includes Cu and/or inevitable impurities such as Fe, Mn, Cr, or Co. P-containing compounds are affected by inevitable impurities such as Fe, Mn, Cr, or Co, too. When the concentration of the inevitable impurities exceeds the afore-mentioned defined amount, the composition of P-containing compound changes such that P-containing compound may no longer contribute to improvement of machinability.

Incidentally, P-containing compounds are not present in a temperature range of about 550°C or higher in the process of cooling after casting. They are formed at a temperature of lower than 550°C during cooling at a critical cooling rate. However, that is not necessarily the case when a large amount of inevitable impurities are included because the configuration (composition) of P-containing compound may change as described above. As a result of diligent study, it was found that cooling is preferably performed at a cooling rate of 55 °C/min or lower in a temperature range from 530°C to 450°C in the process of cooling after casting. The cooling rate in a temperature range from 530°C to 450°C is more preferably 50 °C/min or lower and still more preferably 45 °C/min or lower. On the other hand, when the cooling rate is excessively low, P-containing compounds are likely to grow bigger, which causes their effect on machinability to decrease. The lower limit of the cooling rate in a temperature range from 530°C to 450°C is preferably 0.1 °C/min or higher and more preferably 0.3 °C/min or higher. The upper limit value of the cooling rate, 55 °C/min, varies to some extent depending on the P content, and when the P content is large, P-containing compounds are formed at a higher cooling rate.

(Bi Particles (Particles including Bi) present in α Phase)

The machinability of a β single-phase alloy including Si, and also, that of a β single-phase alloy including P in which P-containing compounds are present are similar to the level of machinability of a free-cutting brass including 3 mass% Pb. In embodiments of the present invention, α phase is included and functions as a cushioning material between β phases and as an origin of chip breakage, and contributes to better chip breakability. As a result, a copper alloy casting having excellent machinability can be obtained even though the amount of Pb contained is very small. Here, contribution of Bi included as an optional element to machinability is slightly less than that of Pb. Yet, when Bi particles are present in α phase, the machinability is improved by a different action. That is, the machinability of α phase is slightly improved by including Si, but such an effect of Si is limited. By the presence of Bi particles in α phase, the machinability of α phase itself is improved. The more the number of Bi particles present in α phase, the better the machinability of α phase, and in turn the machinability of the alloy is improved.

Bi hardly solid-solubilizes in copper alloy and is present as circular particles having a dimension of 0.3 μm to 3 μm when observed with a metallographic microscope. Bi has a lower melting point, a larger atomic number, and a larger atomic size than those of Cu or brass, an alloy comprising Cu and Zn. Therefore, in the case of a brass casting that does not include Si but contain β phase in an amount exceeding about 20%, Bi particles are scarcely present in α phase. They are mainly present at a phase boundary between α phase and β phase, and as the amount of β phase increases, the amount of Bi particles present in β phase increases. In an embodiment of the present invention, it was found that the number of Bi particles present in α phase increases due to the action of Si on the Cu-Zn alloy. The action becomes clear as the Si content increases to higher than 0.40 mass%, higher than 0.50 mass%, and 0.70 mass% or higher. Further, the number of Bi particles that are present in α phase is increased by inclusion of P as well. It is known that Bi has lower machinability than Pb. However, in embodiments of the present invention, by causing Bi particles to be present in α phase, the same level of effect on machinability as Pb, or, in some cases, even a better effect than Pb can be eventually obtained. When Bi and Pb are added together, Bi and Pb coexist in many of the particles, but they exhibit substantially the same effect on machinability as when Bi is included alone. Incidentally, in order to increase the machinability of α phase by increasing the number of Bi particles present in α phase, it is preferable that Bi is included in an amount exceeding 0.020 mass%.

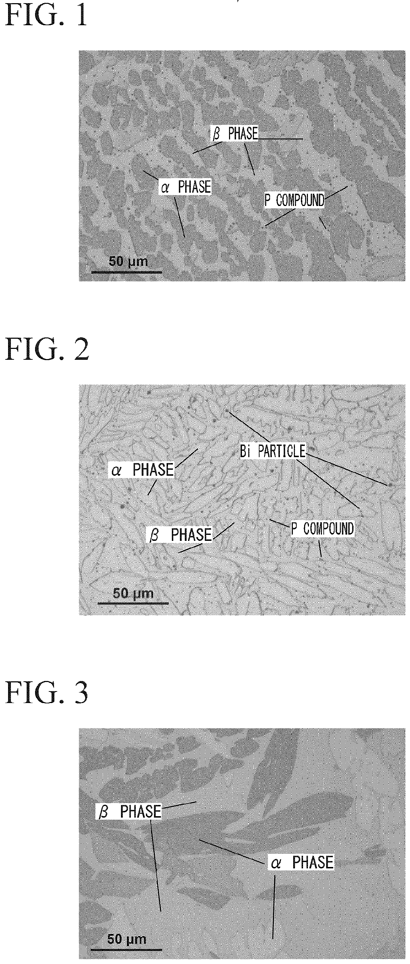

Here, Figs. 1 to 3 show pictures of metallographic structure of various alloys.

Fig. 1 is a picture showing a metallographic structure of the alloy of Test No. T07. It is an alloy including 62.5 mass% Cu, 1.00 mass% Si, 0.063 mass% P, 0.016 mass% Pb, and Zn as the balance (Alloy No. S02), and was produced under the conditions where the cooling rate in a temperature range from 650°C to 550°C after casting was 40°C/min, the cooling rate in a temperature range from 530°C to 450°C was 30°C/min, and the cooling rate in a temperature range from 430°C to 350°C was 25°C/min (Step No. 1).

Fig. 2 is a picture showing a metallographic structure of the alloy of Test No. T35 which contains 62.2 mass% Cu, 1.02 mass% Si, 0.067 mass% P, 0.073 mass% Pb, 0.042 mass% Bi, and Zn as the balance (Alloy No. S20). The casting of Test No. T35 was produced under the conditions where the cooling rate in a temperature range from 650°C to 550°C after casting was 40 °C/min, the cooling rate in a temperature range from 530°C to 450°C after casting was 30 °C/min, and the cooling rate in a temperature range from 430°C to 350°C after casting was 25 °C/min (Step No. 1).

Fig. 3 is a picture showing a metallographic structure of the alloy of Test No. T106 which contains 63.1 mass% Cu, 1.08 mass% Si, 0.001 mass% P, 0.025 mass% Pb, and Zn as the balance (Alloy No. S53). The casting of Test No. T106 was produced under the conditions where the cooling rate in a temperature range from 650°C to 550°C after casting was 40 °C/min, the cooling rate in a temperature range from 530°C to 450°C was 30 °C/min, and the cooling rate in a temperature range from 430°C to 350°C was 25 °C/min (Step No. 1).

The granular black precipitates having a size of about 0.5 to 3 μm in Fig. 1 are P-containing compounds. From this figure, it can be seen that a large amount of P-containing compounds are present in β phase. In Fig. 2, particles including Bi having a dimension of about 1 μm are observed in α phase, and P-containing compounds are observed in β phase.

On the other hand, Fig. 3 shows that P-containing compounds are not observed with a metallographic microscope because the P content is 0.001 mass%. In addition, since the P content is 0.001 mass%, α phase crystal grains are large.

(Content of Si Solid-Solubilized in β Phase and Machinability)

The contents of Cu, Zn, and Si in α phase, β phase, and γ phase formed in an alloy having a composition that falls within a composition range according to an embodiment of the present invention roughly have the following relationships.

The Cu concentration: $\alpha > \beta \geq \gamma$.
The Zn concentration: $\beta > \gamma > \alpha$.
The Si concentration: $\gamma > \beta > \alpha$.

Regarding test samples "a" to "d" described below, the concentrations of Cu, Zn, and Si in α, β, and γ phases were quantitatively analyzed with an X-ray microanalyzer using secondary electron images and compositional images of the samples taken at a magnification of 2000x. The measurement was performed using "JXA-8230" (manufactured by JEOL Ltd.)under the conditions of acceleration voltage: 20 kV and current value: $3.0 \times 10^{-8}$ A. The results are shown in Tables 3 to 6.

Test sample "a": an alloy including 63.1 mass% Cu, 1.18 mass% Si, 0.048 mass% P, and Zn as the balance, which is produced under the conditions where the cooling rate in a temperature range from 650°C to 550°C after casting was 40 °C/min, the cooling rate in a temperature range from 530°C to 450°C was 30 °C/min, and the cooling rate in a temperature range from 430°C to 350°C was 25 °C/min (Step No. 1)

Test sample "b": an alloy including 63.1 mass% Cu, 1.18 mass% Si, 0.048 mass% P, and Zn as the balance, which is produced under the conditions where the cooling rate in a temperature range from 650°C to 550°C after casting was 40 °C/min, the cooling rate in a temperature range from 530°C to 450°C was 30 °C/min, the cooling rate in a temperature range from 430°C to 350°C was 25 °C/min. After being cooled to a room temperature, the test sample was subjected to low-temperature annealing in which the alloy was held at 350°C for 20 minutes (Step No. 8)

Test sample "c": an alloy including 61.4 mass% Cu, 0.81 mass% Si, 0.044 mass% P, and Zn as the balance, which is produced under the conditions where the cooling rate in a temperature range from 650°C to 550°C after casting was 40 °C/min, the cooling rate in a temperature range from 530°C to 450°C was 30 °C/min, and the cooling rate in a temperature range from 430°C to 350°C was 25 °C/min (Step No. 1)

Test sample "d": an alloy including 62.8 mass% Cu, 0.98 mass% Si, 0.053 mass% P, and Zn as the balance, which is produced under the conditions where the cooling rate in a temperature range from 650°C to 550°C after casting was 40 °C/min, the cooling rate in a temperature range from 530°C to 450°C was 30 °C/min, and the cooling rate in a temperature range from 430°C to 350°C was 25 °C/min (Step No. 1)

The concentration of the Si solid-solubilized in $\beta$ phase is about 1.5 times that in $\alpha$ phase. That is, 1.5 times the amount of Si in $\alpha$ phase is distributed in $\beta$ phase. For example, when the Si concentration in the alloy is 1.15 mass%, about 0.9 mass% Si is solid-solubilized in $\alpha$ phase, and about 1.4 mass% Si is solid-solubilized in $\beta$ phase.

Incidentally, an alloy having a representative composition of Patent Document 2, that is, 76 mass% Cu, 3.1 mass% Si, and Zn as the balance, was prepared and analyzed with an X-ray microanalyzer (EPMA). The result was that the composition of $\gamma$ phase was 73 mass% Cu, 6 mass% Si, and 20.5 mass% Zn. This composition of $\gamma$ phase is significantly different from the composition of 60 mass% Cu, 3.5 mass% Si, and 36 mass% Zn, which is the composition of $\gamma$ phase in an embodiment of the present invention. Therefore, it is expected that characteristics of the $\gamma$ phases of the alloys are also different.

Table 3

| Test sample a: Alloy of Zn-63.1 mass% Cu-1.18 mass% Si-0.048 mass% P (Step No. 1) | | | |
|---|---|---|---|
| | Cu | Zn | Si |
| $\alpha$ phase | 66.0 | 33.0 | 0.9 |
| $\beta$ phase | 60.0 | 38.5 | 1.5 |

Table 4

| Test sample b: Alloy of Zn-63.1 mass% Cu-1.18 mass% Si-0.048 mass% P (Step No. 8) | | | |
|---|---|---|---|
| | Cu | Zn | Si |
| $\alpha$ phase | 65.5 | 33.0 | 0.9 |
| $\beta$ phase | 60.0 | 38.5 | 1.4 |
| $\gamma$ phase | 60.0 | 36.0 | 3.5 |

Table 5

| Test sample c: Alloy of Zn-61.4 mass% Cu-0.81 mass% Si-0.044 mass% P (Step No. 1) | | | |
|---|---|---|---|
| | Cu | Zn | Si |
| $\alpha$ phase | 64.0 | 35.0 | 0.6 |
| $\beta$ phase | 58.5 | 40.0 | 1.0 |

Table 6

| Test sample d: Alloy of Zn-62.8 mass% Cu-0.98 mass% Si-0.053 mass% P (Step No. 1) | | | |
|---|---|---|---|
| | Cu | Zn | Si |
| $\alpha$ phase | 65.0 | 34.0 | 0.8 |
| $\beta$ phase | 60.0 | 38.5 | 1.3 |

(Machinability Index)

In general, machinability of various copper alloys is expressed by numerical value (%) by comparison with a free-cutting brass including 3 mass% Pb which is used as a standard, i.e., 100% refers to the machinability of the standard alloy. Machinability of copper alloys is described, for example, in "Basic and Industrial Technique of Copper and Copper Alloy (Revised Edition)" (1994, Japan Copper and Brass Association), p. 533, Table 1, and "Metals Handbook TENTH EDITION Volume 2 Properties and Selection: Nonferrous Alloys and Special-Purpose Materials" (1990, ASM International), p. 217 to 228.

Alloys A to F in Tables 7 and 8 are alloys including 0.01 mass% Pb prepared in a laboratory by melting with an electric furnace in the laboratory, pouring the melt into a casting mold having an inner diameter of 100 mm and a depth of 200 mm, then hot-extruding to φ22 mm using an extrusion test machine in the laboratory. Alloys G to I are alloy castings including 0.01 mass% Pb that were produced in a laboratory. In the case of Cu-Zn binary alloys, containing a small amount of Pb hardly affects the machinability of the alloy. Therefore, 0.01 mass% Pb, which falls within a component range according to an embodiment of the present invention, was added to each of the alloys. The hot extrusion temperature of Alloys A and D was 750°C, and the hot extrusion temperature of the other alloys, Alloys B, C, E, and F, was 635°C. After the extrusion, a heat treatment was performed at 500°C for 2 hours to adjust the metallographic structure. Alloys G and H are alloys including 0.01 mass% Pb and were obtained by casting the melt at 1000°C into a metal mold having an inner diameter of 35 mm and a depth of 200 mm after melting. The castings of these alloys were prepared by taking out the alloys from the mold in the course of cooling when the alloys were at about 700°C, cooling to 350°C under the conditions where the average cooling rate in a temperature range from 650°C to 550°C was 40 °C/min, the average cooling rate in a temperature range from 530°C to 450°C was 30 °C/min, and the average cooling rate in a temperature range from 430°C to 350°C was 25 °C/min, and subsequently, air-cooling at an average cooling rate of 20 °C/min. The turning and drilling tests described below were performed to find out the machinability of the castings. A commercially available free-cutting brass, C3604 (comprising 59 mass% Cu, 3 mass% Pb, 0.2 mass% Fe, 0.3 mass% Sn, and Zn as the balance) was used as the standard free-cutting brass material.

Table 7

| | Material | Component Composition (mass%) | | | | | Metallographic Structure (%) | |
|---|---|---|---|---|---|---|---|---|
| | | Cu | Zn | Si | Pb | P | α | β |
| Alloy A | α brass | 65.0 | 35.0 | 0.0 | 0.01 | 0 | 100 | 0 |
| Alloy B | 50% β brass | 58.1 | 41. 9 | 0.0 | 0.01 | 0 | 52 | 48 |
| Alloy C | β brass | 54.0 | 46.0 | 0.0 | 0.01 | 0 | 0 | 100 |
| Alloy D | α brass with 0.9 Si | 69.1 | 30.0 | 0.88 | 0.01 | 0 | 100 | 0 |
| Alloy E | β brass with 1.3 Si | 59.8 | 38.8 | 1.3 | 0.01 | 0 | 0 | 100 |
| Alloy F | β brass with P + 1.3 Si | 59.6 | 39.0 | 1.3 | 0.01 | 0.05 | 0 | 100 |
| Alloy G | β brass casting with 1.3 Si | 59.9 | 38.7 | 1.3 | 0.01 | 0 | 0 | 100 |
| Alloy H | β brass casting with P + 1.3 Si | 59.8 | 38.8 | 1.3 | 0.01 | 0.05 | 0 | 100 |
| Alloy I | β brass casting with P + 1.0 Si | 58.6 | 40.3 | 1.0 | 0.01 | 0.05 | 0 | 100 |

Table 8

| | Machinability | Turning | | Hole Drilling | | | |
|---|---|---|---|---|---|---|---|
| | Overall (%) | Cutting Resistance (%) | Chips | Cutting Resistance | | | Chips |
| | | | | Overall (%) | Torque (%) | Thrust (%) | |
| Alloy A | 31 | 33 | X | 28 | 26 | 30 | X |
| Alloy B | 44 | 39 | X | 49 | 46 | 52 | X |
| Alloy C | 51 | 41 | X | 61 | 53 | 68 | X |
| Alloy D | 38 | 39 | X | 36 | 33 | 39 | X |

(continued)

| | Machinability | Turning | | Hole Drilling | | | |
| --- | --- | --- | --- | --- | --- | --- | --- |
| | Overall (%) | Cutting Resistance (%) | Chips | Cutting Resistance | | | Chips |
| | | | | Overall (%) | Torque (%) | Thrust (%) | |
| Alloy E | 75 | 79 | Δ | 71 | 65 | 76 | Δ |
| Alloy F | 85 | 93 | ○ | 76 | 74 | 77 | ○ |
| Alloy G | 75 | 78 | Δ | 71 | 64 | 77 | Δ |
| Alloy H | 84 | 92 | ○ | 76 | 73 | 78 | ○ |
| Alloy I | 81 | 88 | ○ | 74 | 72 | 76 | ○ |

The above-mentioned Patent Documents describe that the machinability index of an α single-phase brass comprising 70% Cu and 30% Zn is 30%. In an embodiment of the present invention, as shown in Tables 7 and 8, the machinability of an alloy comprising 65% Cu and 35% Zn, which is also an α single-phase brass (Alloy A), was 31%. In an α single-phase brass in which the contents of Cu and Zn were adjusted and the Si content was about 0.9 mass%, that is, an α single-phase brass in which 0.9 mass% Si was solid-solubilized in α phase (Alloy D), the machinability index was about 7% points higher compared with an α brass not including Si. Chips of Alloys A and D generated in the turning and drilling tests were both continuous.

In turning, the force applied to the blade (bite) can be decomposed into a principal cutting force, a feed force, and a thrust force, and their combined force (three force components) was regarded as cutting resistance. In the case of drilling, the force applied to the drill was decomposed into torque and thrust, and their average values are shown in the "Overall" column in the "Hole Drilling" section. Further, cutting resistance during turning and that during drilling were averaged and the resultant values are shown in the "Overall" column in the "Machinability" section as overall machinability index (evaluation).

The "Cutting Resistance" in the "Turning" section in Table 8 corresponds to the combined force (machinability index) in the description of Examples. The "Torque", the "Thrust", and the "Overall" in the "Drilling" section in Table 8 correspond to the torque index, the thrust index, and the drill index that appear in the description of Examples, respectively. The evaluation criteria applied to the evaluation of chips are the same as those applied to the Examples.

In a β single-phase brass in which the contents of Cu and Zn were adjusted and Si was not included (Alloy C comprising 54% Cu and 46% Zn), the "overall" machinability index improved about 20% points compared with α phase not including Si (Alloy A). Yet, there was little improvement in chip shape, and the chip evaluation remained the same. In a β-phase alloy including 1.3 mass% Si (Alloy E), the "overall" machinability index was improved by about 24% points as compared to a β single-phase brass not including Si (Alloy C). Chips generated during turning and drilling were slightly improved and were broken, but the difference from those of a free-cutting brass including 3 mass% Pb was large.

In a β single-phase alloy including 0.05 mass% P and about 1.3 mass% Si (Alloy F), the machinability "overall" index was improved by about 10% points as compared to a β single-phase brass including about 1.3 mass% Si without including P (Alloy E). Presence of P improved turning performance by about 14% points and the torque during drilling by about 9% points. The improvement of cutting resistance in turning and that of torque in drilling are related to chip shape, and by including 0.05 mass% P, the evaluation results of the chip shape in both the turning test and the drilling test were improved from "Δ" to "O". The difference in the resistance during turning became very small compared with a free-cutting brass including 3 mass% Pb, and chips produced during turning and drilling remarkably improved as well. According to Tables 7 and 8, whether extruded or cast did not make a significant difference in the machinability of β single-phase test samples (between Alloys E and G and between Alloys F and H). Based on this result, it should be safe to consider that extruded material and cast material have equivalent machinability.

Incidentally, cutting resistance is affected by the alloy's strength, and the higher the strength, the higher the cutting resistance when compared between hot extruded materials. β single-phase brasses and alloys according to an embodiment of the present invention have higher strength than a free-cutting brass including 3 mass% Pb. If the difference in strength is taken into consideration, it can be said that the machinability of a β single-phase alloy including 1.3 mass% Si and 0.05 mass% P is largely equivalent to the machinability of a free-cutting brass including about 3 mass% Pb.

Tables 3 to 8 show that Alloys H and F, both of which are β single-phase brass, correspond to β phase of a free-cutting copper alloy casting according to an embodiment of the present invention, and Alloy D corresponds to its α phase. A free-cutting copper alloy casting according to an embodiment of the present invention is formed of β phase having machinability that is comparable to that of a free-cutting brass including 3 mass% Pb (Alloys H and F) and α phase in which the machinability is improved by including Si (Alloy D). In a representative copper alloy casting according to an embodiment of the present invention, the proportion of β phase is about 50%, the machinability of the β single-phase alloys, Alloys H and F, can be substantially maintained, and this machinability is comparable to that of a leaded free-cutting brass.

Alloy I is a β single-phase alloy casting including P, 0.01 mass% Pb, and 1.0 mass% Si. The large difference between Alloy I and Alloy H is the Si content. Even though the Si content is reduced from 1.3 mass% to 1.0 mass%, Alloy I maintains a high machinability index, and good chip breakability is also secured.

Regarding a hot extruded material, Alloy B is a brass including 0.01 mass% Pb and not including Si or P, in which the proportion of β phase is 48%. Reading Alloy B as a casting based on the previous description, Alloy B has improved cutting resistance both in turning and drilling compared with an α single-phase brass (Alloy A). However, the cutting resistance is higher than that of a β single-phase brass (Alloy C), and the "overall" machinability evaluation is 44%. This "overall" machinability evaluation is approximately 35% points lower than the "overall" machinability evaluation of a free-cutting copper alloy casting according to an embodiment of the present invention having the same proportion of β phase, and the chip shape of Alloy B is totally different from that of a free-cutting copper alloy casting according to an embodiment of the present invention. The brass including 48% β phase without including Si or P can never be a replacement for a free-cutting brass including 3 mass% Pb considering its cutting resistance and the chip shape.

A copper alloy casting according to an embodiment of the present invention includes P-containing compounds in β phase, and has excellent machinability which can be obtained by containing 0.5 to 1.7 mass% Si in its β phase as shown in Tables 3 to 8.

<Properties>

(Strength, Toughness, Ductility)

In general, component segregation is more likely to occur to a casting than to a material subjected to hot working, for example, a hot extruded bar. Casting has larger crystal grains and some micro defects. Therefore, casting is said to be "brittle" or "weak", and is desired to have a high impact value in the evaluation of toughness and ductility. On the other hand, it is said that some kind of brittleness is necessary for a material having excellent chip breakability during cutting. Impact resistance is a property contrary to machinability in some aspect.

There is a strong demand for reduction in the thickness and weight of parts and components that are the target applications of embodiments of the present invention such as mechanical parts. Of course, they need to have excellent toughness and ductility. Strength of casting relates to the Si content solid-solubilized in β phase and α phase, and a high strength can be obtained by containing Si in an amount of at least about 0.5 mass% or higher in β phase. In a casting, as described above, component segregation or micro defects are likely to occur, and it is difficult to appropriately evaluate the strength. In embodiments of the present invention, as a method for evaluating the strength, hardness (Vickers hardness) is adopted, and for the evaluation of toughness and ductility, impact test value (U-notch) is adopted.

Cold working is rarely performed on a casting except for a continuously cast bar. In order for a copper alloy casting to be regarded as having a high strength, it is preferable that it has a Vickers hardness of at least 105 Hv or higher. The Vickers hardness is more preferably 120 Hv or higher. Hardness and tensile strength have a correlation with each other. In embodiments of the present invention, a Vickers hardness of 105 Hv corresponds to a tensile strength of about 420 N/mm$^2$, and a Vickers hardness of 120 Hv corresponds to a tensile strength of about 450 N/mm$^2$.

When a casting is used as a material for various components, for example, mechanical components, automobile components, drinking water supply devices such as valves or joints, metal fittings of faucet, or those of industrial plumbing, as described above, the casting needs to be a material not only having a high strength but also having toughness that can resist to impact. To that end, when a Charpy impact test is performed using a U-notched specimen, the casting preferably has a Charpy impact test value of 25 J/cm$^2$ or higher, more preferably 30 J/cm$^2$ or higher, and still more preferably 35 J/cm$^2$ or higher. On the other hand, when the Charpy impact test value is higher than 90 J/cm$^2$ or 80 J/cm$^2$, for example, so-called viscosity of the material increases, causing the cutting resistance to increase and resulting in deterioration in machinability which is demonstrated by, for example, generation of continuous chips.

(Electrical Conductivity)

Applications of embodiments of the present invention include electrical or electronic apparatus components, components of automobile, an increasing number of models of which are electric-powered, and other parts and components requiring high electrical conductivity. Currently, phosphor bronzes including 6 mass% or 8 mass% Sn (JIS Standard Nos., C5191, C5210) are widely used for these applications, and their electrical conductivities are about 14% IACS and 12% IACS, respectively. Accordingly, there is no serious problem related to electric conductivity as long as the electrical conductivity is 13% IACS or higher. The electrical conductivity is preferably 14% IACS or higher. That copper alloys according to an embodiment of the present invention exhibit electrical conductivity of 13% IACS or higher despite inclusion of over 1 mass% Si, an element that deteriorates electrical conductivity, and higher than or equal to about 33 mass% Zn, is influenced by the amount of β phase in the alloy and Si solid-solubilized in the β phase.

From the above-stated results of studies, the following findings were obtained.

First, in the conventional art, it was known that β phase formed in a Cu-Zn-Si alloy has no effect on the machinability of an alloy or has a negative effect on the machinability. However, as a result of diligent study, the present inventors have ascertained that β phase comprising, for example, about 1.3 mass% Si, about 60 mass% Cu, and about 38.5 mass% Zn, has excellent machinability.

Secondly, it was found that, in order to further improve the machinability of β phase of a Cu-Zn-Si alloy, if P is added and have a P-containing compound having a particle size of about 0.3 to about 3 μm, for example, P-Si, P-Si-Zn, P-Zn, or P-Zn-Cu exist in β phase, the cutting resistance further decreases to lower than that of an alloy in which no P-containing compound is present, and at the same time, the chip breakability significantly improves.

Thirdly, it was ascertained that γ phase formed in a copper alloy casting according to an embodiment of the present invention has an effect on chip breakability. The free-cutting copper alloys of the Patent Documents have compositions different than that of a free-cutting copper alloy casting according to an embodiment of the present invention. Even though the copper alloys of the Patent Documents and free-cutting copper alloy castings according to an embodiment of the present invention both have γ phase, if their compositions are different, a large difference is exhibited in machinability similarly to β phase as described above. It was also found that γ phase present in an alloy having a composition of an embodiment of the present invention has excellent machinability. It was revealed that free-cutting copper alloy castings of an embodiment of the present invention has excellent machinability, in particular, chip breakability of γ phase during drilling among others, even though the contents of Cu and Si are low. However, since γ phase hinders ductility and toughness, it was necessary to limit its amount. It was found that even if the amount of γ phase contained is small or γ phase is not contained, excellent machinability can be obtained by adjusting the proportions of α phase and β phase.

Fourthly, it was revealed that providing that Pb is not solid-solubilized in β phase in effect and is present in the form of Pb particle even when its content is very small, Si is contained in the above-described predetermined amount or more, and β phase including a compound of P is present, a significant effect is exhibited on improvement of chip breakability and a reduction in cutting resistance.

Fifthly, it was verified that Bi has a lower effect on machinability than Pb but can be a replacement for Pb. When Si was added in the predetermined amount or more, particles including Bi started to be present in α phase, and as a result, the machinability of α phase improved. It was found that the effect of Bi in this case is equivalent to or higher than that of Pb.

Sixthly, β phase including Si has high strength but its ductility and toughness are low. A material containing an excessive amount of β phase was not suitable as an industrial material. In order to obtain a copper alloy having excellent toughness, ductility and high strength while maintaining machinability such as excellent chip breakability and low cutting resistance, the amounts of α phase, β phase, and γ phase and the like have been optimized. Further, in the case of casting, not only machinability but also castability is important. Therefore, the free-cutting copper alloy castings according to an embodiment of the present invention was completed by verifying the relationship between the contents of Cu and Si, solidification temperature range, and castability and the relationship between solidification temperature range and castability and optimizing the relationship between the contents of Cu and Si and the metallographic structure of the casting.

(Castability)

In the embodiments of the present invention, it is essential to provide a sound casting. Therefore, they should not have any cracks, and it is desired that the amount of micro defects is small. Regarding cracking during casting, what primarily matters is whether or not any metal whose melting point is low is present as a melt after the alloy is solidified but its temperature is still high, and when such a metal having a low melting point is present, the amount of the metal and whether or not the matrix has ductility under a high temperature are the factors that determine whether cracking occurs. Cracking is less likely to occur during casting to the embodiments of the present invention because the amount of low melting point metal such as Pb or Bi present in the form of a melt in the matrix is significantly limited in the processes of solidification and cooling of the casting. Further, if the composition and various relational expressions of the embodiments are satisfied, the adverse effect of the low melting point metal that is contained in a small amount can be covered since β phase having excellent ductility under a high temperature is contained in a large amount. Therefore, there is no problem of cracking during casting.

In the embodiments of the present invention, the challenge as a casting is to minimize micro defects. Micro defects are likely to occur in the portion that solidifies last. In most cases, the finally solidified portion is contained in the portion composed of additionally poured melt by a good casting plan. However, in some cases, the finally solidified portion is partially present in the main body of the casting, or, depending on the shape of the casting, is present in the main body of the casting in its entirety. Micro defect can be found through a Tatur Shrinkage Test performed in a laboratory. It was found that, in the case of castings according to an embodiment of the present invention, the result of the Tatur Shrinkage Test, the contents of Cu and Si, the composition relational expression f1, and the solidification temperature range have a close relationship with each other.

It was found that, when the Cu content is 65.0 mass% or higher or the Si content is 1.4 mass% or higher, micro defects in the finally solidified portion increases and that, when the composition relational expression f1 exceeds 59.5, the amount of micro defects increases. When the solidification temperature range, that is, (liquidus temperature-solidus temperature) exceeds 25°C, shrinkage cavities and micro defects during casting appear to a remarkable level, and a sound casting cannot be obtained. The solidification temperature range is preferably 20°C or lower and more preferably 15°C or lower. When the solidification temperature range is 15°C or lower, sounder castings can be obtained. Solidification temperature range cannot be read from a ternary phase diagram.

<Production Process>

Next, a method for producing free-cutting copper alloys according to the first to third embodiments of the present invention will be described.

The metallographic structure of a free-cutting copper alloy according to an embodiment of the present invention varies not only depending on the composition but also depending on the production process. As a method for producing casting, there are various casting methods such as die casting, metal mold casting, sand mold casting (including a continuous casting), and lost-wax casting. Depending on the thickness and shape of the casting and the material, thickness and the like of the metal mold or the sand mold, the cooling rate of a casting after it is solidified is roughly determined. The cooling rate can be changed by modifying the cooling method, heat retention, and the like. On the other hand, in the process of cooling after solidification, various changes occur in the metallographic structure, and the metallographic structure significantly changes depending on the cooling rate. A change in metallographic structure refers to a significant change in the kinds and the amounts of the phases that constitute the metallographic structure. As a result of diligent study on the cooling process, it was found that the cooling rate in a temperature range from 530°C to 450°C is most important and significantly affects machinability among others.

(Melting)

Melting is performed at about 950°C to about 1200°C, a temperature that is about 100°C to about 300°C higher than the melting point (liquidus temperature) of a free-cutting copper alloy casting according to an embodiment of the present invention. The melt is then poured into a predetermined casting mold when it is at about 900°C to about 1100°C, a temperature that is about 50°C to about 200°C higher than the alloy's melting point. After the alloy solidifies, constituent phases change in various ways.

(Casting)

Using the above-mentioned production method, high-strength free-cutting copper alloys according to the first and second embodiments of the present invention are produced. The cooling rate after casting and solidification varies depending on the weight and the thickness of the cast copper alloy and the material of the sand mold, the metal mold, or the like. For example, in general, when a conventional copper alloy casting is produced by casting using a metal mold made of a copper alloy or an iron alloy, the casting is removed from the mold after casting when the temperature is at about 700°C or lower and then is cooled by forced cooling, air cooling, or slow cooling at an average cooling rate of about 5 °C/min to about 200 °C/min. On the other hand, when a sand mold is used, although depending on the size of the casting and the material and the size of the sand mold, the copper alloy cast into the sand mold is cooled at an average cooling rate of about 0.05 °C/min to about 30 °C/min.

In free-cutting copper alloy castings according to an embodiment of the present invention, the metallographic structure immediately after solidification after casting is composed solely of β phase when the casting is at a high temperature like 800°C. During subsequent cooling, various phases such as α phase, γ phase, κ phase, and μ phase are produced and formed. For example, when the cooling rate in a temperature range from 450°C to 800°C is high, the amount of β phase is large. When the cooling rate in a temperature range below 450°C is low, γ phase is likely to be produced.

It is difficult to significantly change the cooling rate because the casting plan, the shape of the casting, and the like are fixed. Therefore, castings are cooled with the average cooling rate in a temperature range from 530°C to 450°C adjusted to 0.1 °C/min or higher and 55 °C/min or lower. By doing so, P-containing compounds are formed and can be observed with a metallographic microscope having a magnification power of 500x. By the effect of these P-containing compounds, the chip breakability is improved, and the cutting resistance is significantly reduced.

If the copper alloy is cooled in a temperature range from 430°C to 350°C at an average cooling rate of 0.1 °C/min or higher and 10 °C/min or lower, γ phase can be produced, or the amount of γ phase can be increased. This is also relevant to the alloy's composition though. As a result, the torque during drilling can be reduced, and the chip breakability can be improved. However, attention must be paid to the fact that when a large amount of γ phase is included, the cutting resistance increases rather than decreases because γ phase reduces the impact value.

(Heat Treatment)

In order to improve drilling workability by the presence of a small amount of γ phase and to remove the residual stress of the casting, heat treatment is sometimes performed. To that end, it is preferable that the heat treatment is performed at 250°C or higher and 430°C or lower for 5 to 200 minutes.

It is preferable that the annealing conditional expression $f7 = (T - 200) \times (t)^{1/2}$ satisfies $300 \leq f7 \leq 2000$. In f7, T represents the temperature (°C), and t represents the heating time (min). When the annealing conditional expression f7 is lower than 300, the removal of the residual stress may be insufficient, or the production of γ phase may be insufficient. On the other hand, when the annealing conditional expression f7 exceeds 2000, the machinability may decrease due to an increase in the amount of γ phase and a decrease in the amount of β phase.

Using the above-mentioned production method, free-cutting copper alloy castings according to the first to third embodiments of the present invention are produced.

In a free-cutting copper alloy casting according to any one of the first to third embodiment of the present invention having the above-described constitution, since the alloy's composition, the composition relational expressions f0 and f1, the metallographic structure, the metallographic structure relational expressions f2 to f6, and the metallographic structure and composition relational expression f6A are defined as described above, even though the content of Pb is small, excellent machinability can be obtained, and the casting is able to have excellent castability, good strength, toughness, and ductility.

EXAMPLES

Hereinafter, the results of the experiments that were performed to verify the effects of embodiments of the present invention will be described. The following Examples are presented for the purpose of explaining the effects of the embodiments. The constituent requirements, the processes, and the conditions contained in the description of the Examples do not limit technical ranges of the embodiments.

In a laboratory, various components were mixed, then testing was performed at varied cooling rates after casting. Tables 9 to 11 show the alloys' compositions. Table 12 shows production steps. Regarding alloy composition, "MM" refers to mischmetal and represents the total content of rare earth elements.

(Steps Nos. 1 to 7)

In a laboratory, raw materials mixed at a predetermined component ratio were melted. In this melting step, inevitable impurities such as Fe or Sn were intentionally added in consideration of actual commercial production. In particular, regarding Alloys Nos. S27 to S36, an increased amount of inevitable impurities were added. The melt at about 1000°C was cast into an iron mold having an inner diameter of 35 mm and a depth of 200 mm.

In consideration of actual casting, when the temperature of the casting came down to about 700°C, the test samples were taken out of the mold and cooled to a room temperature by natural cooling, thermal insulation, or forced cooling at seven different average cooling rates in the temperature ranges from 650°C to 550°C, from 530°C to 450°C, and from 430°C to 350°C. Table 12 shows a list of the cooling conditions. Regarding temperature measurement, the temperature of the casting was taken using a contact thermometer, and the average cooling rate in each of the temperature ranges was adjusted to a predetermined value.

(Step No. 8)

Heat treatment was performed on the castings made of Alloys Nos. S01, S20, and S21 under the conditions shown in Table 12.

The above-described test materials were evaluated for the following items. The evaluation results are shown in Tables 13 to 20.

(Observation of Metallographic Structure)

The metallographic structure was observed using the following method, then the area ratios (%) of the respective phases such as α phase, β phase, γ phase, κ phase, and μ phase were measured by image analysis method. It was assumed that α' phase, β' phase, and γ' phase were included in α phase, β phase, and γ phase respectively.

Each of the test piece of casting was cut parallel to its long side. Next, the surface was polished (mirror-polished) and was etched with a mixed solution of hydrogen peroxide and ammonia water. For etching, an aqueous solution obtained by mixing 3 ml of 3 vol% hydrogen peroxide water and 22 ml of 14 vol% ammonia water was used. At a room temperature of about 15°C to about 25°C, the polished metal surface was dipped in the aqueous solution for about 2 seconds to about 5 seconds.

The metallographic structure was observed with a metallographic microscope at a magnification of 500x to obtain the proportion of each of the phases and investigate whether or not any P-containing compounds were present. Regarding test samples containing Bi, locations of Bi particles were checked. Depending on the state of the metallographic structure, metallic phases, Bi particles, and P-containing compounds were observed at a magnification of 1000x. In micrographs of five visual fields, respective phases (α phase, β phase, γ phase, κ phase, and μ phase) were manually painted using image processing software "Photoshop CC". Next, the micrographs were binarized using image analysis software "WinROOF 2013" to obtain area ratio of each of the phases. Specifically, proportion of each of the phases was obtained by averaging area ratios of each phase in the five visual fields. In this area ratio calculation, the aggregate of the area ratio of each and every constituent phase excluding oxides, sulfides, Bi particles, Pb particles, precipitates (P-containing compounds are excluded), and crystallized particles constitutes 100%.

Then P-containing compounds were observed. The minimum size of a precipitated particle of a P-containing compound that can be observed with a metallographic microscope at a magnification of 500x is about 0.5 μm. Among precipitates which can be observed with the metallographic microscope and distinguished and recognized at a magnification of 1000x, whether or not any P-containing compounds were present was determined first in the same manner as when the proportion of the phases were observed. Although depending on the P content and the production conditions, several to several hundreds of P-containing compounds were observed in one visual field of the microscope. As most of the P-containing compounds were present in β phase or at a phase boundary between α phase and β phase, they were assumed to be included in β phase. Further, γ phase having a size of less than 0.5 μm is sometimes present in β phase. Phases having a size of less than 0.5 μm are unable to be identified with a metallographic microscope having a magnification power of 500x or in some cases even with one having a magnification power of 1000x. Therefore, in embodiments of the present invention, ultrafine γ phase was treated as β phase. When observed with a metallographic microscope, P-containing compound appears blackish grey. Therefore, it is distinguishable from a precipitate or a compound formed of Mn or Fe which has a light blue color.

Incidentally, when a test sample containing P is etched with an etching solution according to an embodiment of the present invention, phase boundaries between α phase and β phase can be viewed clearly as shown in Figs. 1 and 2. When the P content is about 0.01 mass% or more, the boundaries can be observed more clearly, indicating that inclusion of P causes metallographic structure to change.

Bi particles were observed with a metallographic microscope in the same manner as when P-containing compounds were observed. Bi particles and P-containing compounds can be clearly distinguished in the metallographic micrograph of Fig. 2. In particular, P-containing compounds are scarcely present in α phase. Therefore, the particles present in α phase are Bi particles. When it was difficult to distinguish them from one another, an electron microscope having an analytical function, for example, EPMA was used for the determination. If Bi particles were found in a α phase crystal grain in a micrograph, it was determined that Bi particles were present in α phase, and the evaluation was "O" (present). If Bi particles were present at a boundary between α phase and β phase, it was determined that Bi particles were not present in α phase. If Bi particles were not present in α phase, the evaluation was "X" (absent).

When it was difficult to identify phases, precipitates, P-containing compounds, and Bi particles, they were identified by an electron backscattering diffraction pattern (FE-SEM-EBSP) method in which a field emission scanning electron microscope (FE-SEM) (JSM-7000F, manufactured by JEOL Ltd.) equipped with its accessory EDS was used, at a magnification of 500x or 2000x under the conditions of an acceleration voltage of 15 kV and a current value of 15 (set value). When no P-containing compound was observed in a test sample containing P at the stage of observation using a metallographic microscope, presence of P-containing compound was checked at a magnification of 2000X.

In addition, regarding some alloys, when the Si concentration in α phase, β phase, and γ phase (particularly the concentration in β phase) was measured and when it was difficult to determine the presence of P-containing compound, or when Bi particles were small, quantitative analysis or qualitative analysis was performed with an X-ray microanalyzer on a secondary electron image and a compositional image taken at a magnification of 2000x. The measurement was performed using "JXA-8230" (manufactured by JEOL Ltd.) at an acceleration voltage of 20 kV and a current value of $3.0 \times 10^{-8}$ A.

If P-containing compounds were observed with a metallographic microscope, the alloy was evaluated as "O" (good) in terms of presence of P-containing compound. If no P-containing compound was found unless observed at a magnification of 2000X, the alloy was evaluated as "Δ" (fair) in terms of presence of P-containing compound. If no P-containing compound was found, the alloy was evaluated as "X" (poor) in terms of presence of P-containing compound.

Those evaluated as "Δ" (fair) regarding presence of P-containing compound are also acceptable in embodiments of the present invention. In the tables, the evaluation results regarding presence of P-containing compounds are shown in the "P Compound" row.

(Measurement of Melting point and Castability Test)

The remainder of the melt used for the preparation of test samples of casting was used. A thermocouple was put into the melt to take liquidus temperature and solidus temperature, then the solidification temperature range was obtained.

In addition, the melt at 1000°C was cast into an iron Tatur mold, and whether or not any defects such as holes or shrinkage cavities were present at the portion that solidified last or in its vicinity was closely examined (Tatur Shrinkage Test).

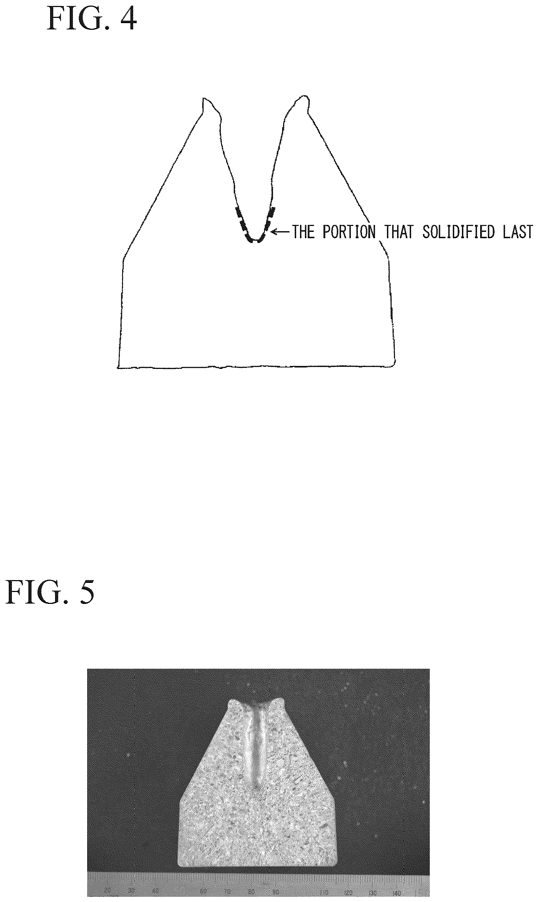

Specifically, the casting was cut so that a vertical section including the finally solidified portion as shown in the illustration of a vertical section of Fig. 4 can be obtained. The surface of the test sample was polished with Emery paper of up to 400 grit, then a macrostructure was exposed using nitric acid to easily identify defective portions. Next, whether or not micro defects were present was examined by a penetration test. Fig. 5 shows the macrostructure of the vertical section after a Tatur Shrinkage Test was performed on Alloy No. S01.

Castability was evaluated as follows. When, in the vertical section, a pattern indicating that the portion was defective appeared in a location within 3 mm from the surface of the finally solidified portion or its vicinity but no defect appeared anywhere more than 3 mm away from the surface of the finally solidified portion or its vicinity, castability was evaluated as "O" (good). When a pattern indicating that the portion was defective appeared in a location within 6 mm from the surface of the finally solidified portion or its vicinity but no defect occurred anywhere more than 6 mm away from the finally solidified portion or its vicinity, castability was evaluated as "Δ" (acceptable or fair). When any defect occurred in a location more than 6 mm away from the surface of the finally solidified portion or its vicinity, castability was evaluated as "X" (defective or poor).

The finally solidified portion is usually present in the portion comprising additionally poured melt due to a good casting plan, but sometimes it is partially present in the main body of the casting. In the case of an alloy casting according to an embodiment of the present invention, the result of the Tatur shrinkage test and the solidification temperature range have a close relationship. When the solidification temperature range was 15°C or lower or 20°C or lower, castability was evaluated as "O" in many cases. When the solidification temperature range exceeded 25°C, castability was evaluated as "X" in many cases. When the solidification temperature range was 25°C or lower, castability was evaluated as either "O" or "Δ". In addition, when the content of inevitable impurities was large, the solidification temperature range was wide, and the evaluation of the castability was bad.

(Electrical Conductivity)

For the measurement of electrical conductivity, an electrical conductivity measurement device (SIGMATEST D2.068, manufactured by Foerster Japan Ltd.) was used. In this specification, the terms "electric conductivity" and "electrical conductivity" are meant to have the same meaning. In addition, thermal conductivity and electrical conductivity are closely corelated. Therefore, the higher the electrical conductivity, the better the thermal conductivity.

(Mechanical Properties)

(Hardness)

The hardness of each of the test materials was measured using a Vickers hardness tester with a load of 49 kN applied. To be a casting having a high strength, its Vickers hardness is preferably 105 Hv or higher and more preferably 120 Hv or higher. It can be said that such a casting is regarded as having a very high level of strength among free-cutting copper castings.

(Impact Resistance)

The impact test was performed using the following method. A U-notched specimen (notch depth: 2mm, notch bottom radius: 1 mm) according to JIS Z 2242 was taken. Using an impact blade having a radius of 2 mm, a Charpy impact test was performed to measure the impact value.

<Machinability Test using Lathe>

Machinability was evaluated by the machining test using a lathe as described below.

A casting was machined to prepare a test material having a diameter of 14 mm. A carbide tool (chip) K10 not equipped with a chip breaker was attached to a lathe. Using this lathe, the circumference of the test material having a diameter of 14 mm was machined on dry conditions with a rake angle of 0°, a nose radius of 0.4 mm, a clearance angle of 6°, a cutting speed of 40 m/min, a cutting depth of 1.0 mm, and a feed rate of 0.11 mm/rev.

Signals emitted from a dynamometer (AST tool dynamometer AST-TL1003, manufactured by Mihodenki Co., Ltd.) composed of three portions attached to the tool were converted into electrical voltage signals and recorded on a recorder. Next, these signals were converted into cutting resistance (principal cutting force, feed force, thrust force, N). In the machining test, in order to suppress influence from wear on the insert, each test sample was measured four times by reciprocating A → B → C → ... C → B → A twice. The cutting resistance can be obtained from the following expression.

$$\text{Cutting Resistance (Combined Force comprising Principal cutting force, Feed Force, and Thrust Force)} = ((\text{Principal Cutting Force})^2 + (\text{Feed Force})^2 + (\text{Thrust Force})^2)^{1/2}$$

Incidentally, each sample was measured four times, and their average value was adopted. Assuming that the cutting resistance of a commercially available free-cutting brass bar, C3604, made of an alloy including 59 mass% Cu, 3 mass% Pb, 0.2 mass% Fe, 0.3 mass% Sn, and Zn as the balance was 100, the relative value of the cutting resistance (machinability index) of each sample was calculated for relative evaluation. The higher the machinability index, the better the machinability. Incidentally, the "combined force" indicated in the tables refers to the combined force comprising a principal cutting force, a feed force, and a thrust force, which represents the machinability index.

Further, machinability index was calculated as follows. An index representing the results of the machining test performed on a test sample (machinability index) = (cutting resistance of C3604 / cutting resistance of the test sample) $\times$ 100

Concurrently, chips were collected, and machinability was evaluated based on the shape of the chips. Problems that occur in actual machining are entanglement of chips around the tool and bulking of chips. Therefore, regarding chip shape, if the average length of the generated chips was less than 7 mm, it was evaluated as "O" (good). If the average length of the generated chips was 7 mm or more and less than 20 mm, it was determined that machining could be performed although there might be some practical problems and evaluated as "Δ" (acceptable, fair). When the average length of the generated chips was 20 mm or longer, it was evaluated as "X" (poor). Chips generated at the beginning of machining were excluded from the subject of the evaluation.

Cutting resistance of a material depends on the shear strength and the tensile strength of the material, and there is a tendency that the higher the strength of the material, the higher the cutting resistance. In the case of a high strength material, if the cutting resistance is approximately 40% points higher than that of a free-cutting brass bar including 1 to 4 mass% Pb, the cutting resistance is considered to be practically good. Therefore, machinability of embodiments of the present invention was evaluated providing that about 70 was the boundary machinability index (boundary value). Specifically, when the machinability index was higher than 70, the alloy was evaluated to have good machinability (evaluation: "O"; good). When the machinability index was 65 or higher and 70 or lower, the alloy was evaluated to have acceptable machinability (evaluation: "Δ"; fair) and graded as a pass. When the machinability index was lower than 65, the alloy was evaluated to have unacceptable machinability (evaluation: "X"; poor) and graded as a fail.

When there is little difference in strength, there is a correlation between chip shape and machinability index aside from some exceptions. That is, if the machinability index of an alloy is high, the alloy's chip breakability tends to be good, and this correlation can be numerically expressed.

Incidentally, the machinability index of an alloy comprising 58.1 mass% Cu, 0.01 mass% Pb, and Zn as the balance, which constitutes a free-cutting copper alloy bar having a high Zn concentration and including 0.01 mass% Pb with the proportion of β phase being about 50%, was 39, and the alloy's chip length was longer than 20 mm. Likewise, the machinability index of an alloy comprising 55 mass% Cu, 0.01 mass% Pb, and Zn as the balance, which is a β single-phase copper alloy not including Si and including 0.01 mass% Pb, was 41, and the alloy's chip length was longer than 20 mm.

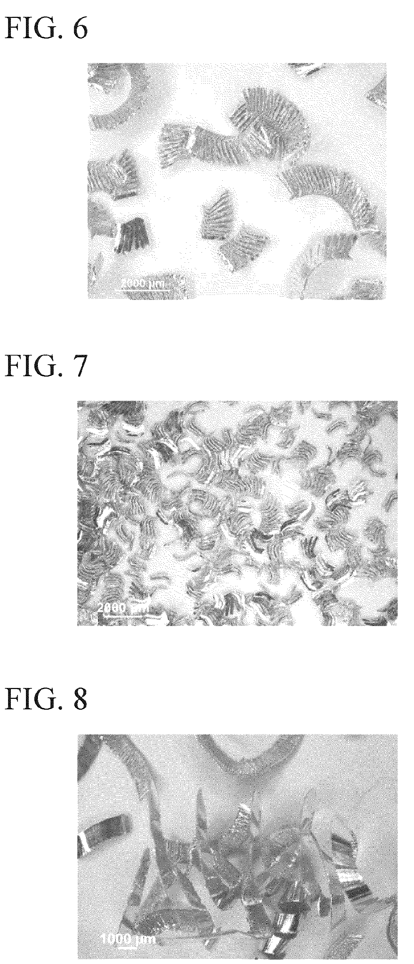

Fig. 6 shows the external appearance of the chips generated in Test No. T07 including 0.063 mass% P and 0.016 mass% Pb in which P-containing compounds were present (Alloy No. S02). Fig. 7 shows the external appearance of the chips generated in Test No. T35 including 0.067 mass% P, 0.073 mass% Pb, and 0.042 mass% Bi and in which P-containing compounds were present and particles including Bi were present in α phase (Alloy No. S20). Fig. 8 shows the external appearance of the chips generated in Test No. T106 including 0.001 mass% P and 0.025 mass% Pb (Alloy No. S53).

The average lengths of the chips generated in Test No. T07 (Alloy No. S02) and Test No. T35 (Alloy No. S20) including P and in which P-containing compounds were able to be observed were about 2 mm and about 0.7 mm, respectively, and the chips were finely broken.

In contrast, in Test No. T106 (Alloy No. S53) in which the P content was 0.003 mass% or lower and P-containing compounds were not observed, the chip length was more than 20 mm, and chips were continuous.

<Drilling Test>

By using a drilling machine with a JIS standard drill made of high-speed steel having a diameter of 3.5 mm attached, 10 mm-deep holes were drilled on dry conditions at a rotation speed of 1250 rpm and a feed rate of 0.17 mm/rev. Voltage fluctuation in a circumferential direction and an axial direction were measured during drilling using an AST tool dynamometer, and torque and thrust during drilling were calculated. Each test sample was measured four times, and their average value was adopted. Assuming that the torque and the thrust of C3604, a commercially available free-cutting brass bar comprising 59 mass% Cu, 3 mass% Pb, 0.2 mass% Fe, 0.3 mass% Sn, and Zn as the balance, was 100, the relative values (torque index, thrust index) of the torque and the thrust of each test sample were calculated for relative evaluation. The higher the machinability index (torque index, thrust index, drill index), the better the machinability. In the drilling, in order to suppress influence from wear on the drill, each test sample was measured four times by reciprocating A → B → C → ... C → B → A twice.

That is, the machinability index was obtained as follows.

$$\text{Index representing the results of drilling test}$$
$$\text{performed on a test sample (drill index)} = (\text{torque index} + \text{thrust index}) / 2$$

$$\text{Torque index of a test sample} = (\text{torque of C3604}/ \text{torque of the test sample}) \times 100$$

$$\text{Thrust index of a test sample} = (\text{thrust of C3604}/ \text{thrust of the test sample}) \times 100$$

During the third test, chips were collected. Machinability was evaluated based on the chip shape. Problems that occur in actual machining are entanglement of chips around the tool and bulking of chips. Therefore, regarding chip shape, if the average number of windings per chip was one or less, it was evaluated as "O" (good). If the average number of windings per chip was more than one and three or less, it was evaluated as "Δ" (fair) determining that drilling could be performed although there might be some practical problems. If the average number of windings per chip was more than three, it was evaluated as "X" (poor). Chips generated at the beginning of drilling were excluded from the subject of the evaluation.

If the torque and the thrust of a high-strength material are higher than the cutting resistance of a free-cutting brass bar including 1 to 4 mass% Pb by about 30% points, the material is considered to be practically good regarding torque and thrust. In embodiments of the present invention, the machinability was evaluated providing that approximately 70 was the boundary machinability index (boundary value). Specifically, when the drill index was 71 or higher, the machinability was evaluated as good (evaluation: "O"; good). When the drill index was 65 or higher and lower than 71, the machinability was evaluated as acceptable (evaluation: "Δ"; fair) determining that drilling could be performed although there might be some practical problems. When the drill index was lower than 65, the machinability was evaluated as unacceptable (evaluation: "X"; poor). It should be noted, however, that both torque index and thrust index need to be 64 or higher.

When there is no difference in strength, chip shape and torque index have a strong relationship aside from some exceptions. When torque index is high, chip breakability tends to be high. Therefore, chip shape can be numerically compared by torque index.

Incidentally, the drill index of an alloy comprising 58.1 mass% Cu, 0.01 mass% Pb, and Zn as the balance, which is a free-cutting copper alloy having a high Zn concentration and including 0.01 mass% Pb with the proportion of $\beta$ phase being about 50%, was 49 (the torque index was 46, and the thrust index was 52), and the number of windings per chip exceeded 3. Likewise, the drill index of a $\beta$ single-phase copper alloy comprising 55 mass% Cu, 0.01 mass% Pb, and Zn as the balance, which is an alloy not including Si and including 0.01 mass% Pb, was 61 (the torque index was 53, and the thrust index was 68), and the number of windings per chip exceeded 3.

Table 9

| Alloy No. | Component Composition (mass%) | | | | | | Inevitable Impurities (mass%) | | | | | | | | | | | Composition Relational Expression | |
|---|---|---|---|---|---|---|---|---|---|---|---|---|---|---|---|---|---|---|---|
| | Cu | Si | P | Pb | Bi | Zn | Fe | Mn | Co | Cr | Sn | Al | Ni | Sb | Ag | B | MM | f0 | f1 |
| S01 | 63.1 | 1.18 | 0.048 | 0.097 | 0 | Balance | 0.01 | 0.00 | 0.00 | 0.00 | 0.01 | 0.00 | 0.00 | 0.00 | 0.00 | 0.000 | 0.00 | 0.097 | 57.2 |
| S02 | 62.5 | 1.00 | 0.063 | 0.016 | 0 | Balance | 0.00 | 0.00 | 0.00 | 0.00 | 0.00 | 0.08 | 0.00 | 0.00 | 0.00 | 0.000 | 0.02 | 0.016 | 57.5 |
| S03 | 62.4 | 1.09 | 0.065 | 0.180 | 0 | Balance | 0.01 | 0.00 | 0.00 | 0.00 | 0.00 | 0.00 | 0.00 | 0.00 | 0.00 | 0.000 | 0.00 | 0.180 | 57.0 |
| S04 | 61.4 | 0.81 | 0.044 | 0.023 | 0 | Balance | 0.09 | 0.00 | 0.03 | 0.00 | 0.09 | 0.04 | 0.00 | 0.00 | 0.00 | 0.000 | 0.00 | 0.023 | 57.3 |
| S05 | 61.9 | 1.11 | 0.110 | 0.006 | 0 | Balance | 0.03 | 0.00 | 0.00 | 0.03 | 0.00 | 0.05 | 0.00 | 0.00 | 0.00 | 0.000 | 0.00 | 0.006 | 56.3 |
| S06 | 64.8 | 1.33 | 0.052 | 0.019 | 0 | Balance | 0.00 | 0.00 | 0.00 | 0.00 | 0.00 | 0.00 | 0.00 | 0.00 | 0.00 | 0.000 | 0.00 | 0.019 | 58.1 |
| S07 | 60.1 | 0.46 | 0.019 | 0.156 | 0 | Balance | 0.00 | 0.00 | 0.00 | 0.00 | 0.00 | 0.00 | 0.00 | 0.00 | 0.00 | 0.000 | 0.00 | 0.156 | 57.9 |
| S08 | 61.9 | 1.04 | 0.150 | 0.085 | 0 | Balance | 0.01 | 0.00 | 0.00 | 0.00 | 0.01 | 0.00 | 0.00 | 0.00 | 0.00 | 0.000 | 0.00 | 0.085 | 56.7 |
| S09 | 60.7 | 0.65 | 0.070 | 0.037 | 0 | Balance | 0.01 | 0.00 | 0.00 | 0.00 | 0.00 | 0.00 | 0.00 | 0.00 | 0.00 | 0.000 | 0.00 | 0.037 | 57.4 |
| S10 | 63.6 | 0.94 | 0.078 | 0.112 | 0 | Balance | 0.00 | 0.00 | 0.00 | 0.00 | 0.00 | 0.00 | 0.00 | 0.00 | 0.00 | 0.000 | 0.00 | 0.112 | 58.9 |
| S11 | 62.0 | 0.89 | 0.053 | 0.212 | 0 | Balance | 0.07 | 0.08 | 0.00 | 0.00 | 0.03 | 0.09 | 0.05 | 0.01 | 0.01 | 0.000 | 0.00 | 0.212 | 57.6 |
| S12 | 62.0 | 0.78 | 0.082 | 0.007 | 0 | Balance | 0.00 | 0.00 | 0.00 | 0.00 | 0.00 | 0.00 | 0.00 | 0.00 | 0.00 | 0.000 | 0.00 | 0.007 | 58.1 |
| S13 | 64.3 | 1.02 | 0.077 | 0.088 | 0.008 | Balance | 0.00 | 0.00 | 0.00 | 0.00 | 0.00 | 0.00 | 0.00 | 0.00 | 0.00 | 0.000 | 0.00 | 0.096 | 59.2 |
| S14 | 61.5 | 0.84 | 0.066 | 0.044 | 0.018 | Balance | 0.01 | 0.00 | 0.00 | 0.00 | 0.01 | 0.00 | 0.00 | 0.00 | 0.00 | 0.010 | 0.00 | 0.062 | 57.3 |
| S15 | 61.6 | 0.71 | 0.013 | 0.051 | 0.004 | Balance | 0.00 | 0.00 | 0.00 | 0.00 | 0.00 | 0.00 | 0.00 | 0.00 | 0.00 | 0.000 | 0.00 | 0.055 | 58.1 |
| S16 | 62.7 | 0.98 | 0.006 | 0.031 | 0.003 | Balance | 0.00 | 0.00 | 0.00 | 0.00 | 0.00 | 0.00 | 0.00 | 0.00 | 0.00 | 0.000 | 0.00 | 0.034 | 57.8 |
| S17 | 58.9 | 0.44 | 0.040 | 0.085 | 0.015 | Balance | 0.00 | 0.00 | 0.00 | 0.00 | 0.00 | 0.00 | 0.00 | 0.00 | 0.00 | 0.000 | 0.00 | 0.100 | 56.7 |
| S18 | 60.9 | 0.51 | 0.034 | 0.078 | 0.010 | Balance | 0.00 | 0.00 | 0.00 | 0.00 | 0.00 | 0.00 | 0.00 | 0.00 | 0.00 | 0.000 | 0.00 | 0.088 | 58.4 |

Note: "MM" refers to mischmetal.

Table 10

| Alloy No. | Component Composition (mass%) | | | | | | Inevitable Impurities (mass%) | | | | | | | | | | | Composition Relational Expression | |
|---|---|---|---|---|---|---|---|---|---|---|---|---|---|---|---|---|---|---|---|
| | Cu | Si | P | Pb | Bi | Zn | Fe | Mn | Co | Cr | Sn | Al | Ni | Sb | Ag | B | MM | f0 | f1 |
| S19 | 63.4 | 0.95 | 0.105 | 0.118 | 0.028 | Balance | 0.00 | 0.00 | 0.00 | 0.00 | 0.00 | 0.00 | 0.00 | 0.00 | 0.00 | 0.000 | 0.00 | 0.146 | 58.7 |
| S20 | 62.2 | 1.02 | 0.067 | 0.073 | 0.042 | Balance | 0.08 | 0.00 | 0.00 | 0.00 | 0.07 | 0.00 | 0.05 | 0.00 | 0.00 | 0.001 | 0.00 | 0.115 | 57.1 |
| S21 | 62.8 | 0.98 | 0.053 | 0.091 | 0.084 | Balance | 0.00 | 0.09 | 0.00 | 0.00 | 0.00 | 0.03 | 0.00 | 0.02 | 0.01 | 0.000 | 0.00 | 0.175 | 58.0 |
| S22 | 60.5 | 0.61 | 0.037 | 0.084 | 0.025 | Balance | 0.00 | 0.08 | 0.00 | 0.00 | 0.00 | 0.07 | 0.08 | 0.00 | 0.01 | 0.000 | 0.01 | 0.109 | 57.5 |
| S23 | 63.5 | 1.21 | 0.048 | 0.087 | 0.057 | Balance | 0.00 | 0.00 | 0.00 | 0.00 | 0.00 | 0.00 | 0.00 | 0.00 | 0.00 | 0.000 | 0.00 | 0.144 | 57.5 |
| S24 | 62.4 | 0.92 | 0.046 | 0.022 | 0.028 | Balance | 0.00 | 0.00 | 0.00 | 0.00 | 0.00 | 0.00 | 0.00 | 0.00 | 0.00 | 0.000 | 0.00 | 0.050 | 57.8 |
| S25 | 62.5 | 0.82 | 0.066 | 0.065 | 0.033 | Balance | 0.00 | 0.00 | 0.02 | 0.02 | 0.00 | 0.00 | 0.06 | 0.00 | 0.00 | 0.000 | 0.00 | 0.098 | 58.4 |
| S26 | 61.9 | 0.88 | 0.085 | 0.175 | 0.063 | Balance | 0.15 | 0.00 | 0.00 | 0.00 | 0.13 | 0.08 | 0.05 | 0.01 | 0.02 | 0.000 | 0.00 | 0.238 | 57.6 |
| S27 | 61.4 | 0.70 | 0.047 | 0.065 | 0 | Balance | 0.08 | 0.04 | 0.00 | 0.00 | 0.09 | 0.03 | 0.00 | 0.00 | 0.00 | 0.000 | 0.00 | 0.065 | 57.9 |
| S28 | 61.4 | 0.70 | 0.045 | 0.064 | 0 | Balance | 0.18 | 0.09 | 0.00 | 0.03 | 0.09 | 0.03 | 0.00 | 0.00 | 0.00 | 0.000 | 0.00 | 0.064 | 57.9 |
| S29 | 61.5 | 0.71 | 0.045 | 0.064 | 0 | Balance | 0.09 | 0.04 | 0.00 | 0.00 | 0.19 | 0.09 | 0.00 | 0.00 | 0.00 | 0.000 | 0.00 | 0.064 | 58.0 |
| S30 | 61.3 | 0.69 | 0.046 | 0.066 | 0 | Balance | 0.30 | 0.18 | 0.00 | 0.03 | 0.09 | 0.03 | 0.00 | 0.00 | 0.00 | 0.000 | 0.00 | 0.066 | 57.9 |
| S31 | 61.4 | 0.70 | 0.047 | 0.065 | 0 | Balance | 0.08 | 0.03 | 0.00 | 0.00 | 0.29 | 0.19 | 0.00 | 0.00 | 0.00 | 0.000 | 0.00 | 0.065 | 57.9 |
| S32 | 63.2 | 1.02 | 0.041 | 0.026 | 0.034 | Balance | 0.07 | 0.04 | 0.00 | 0.00 | 0.08 | 0.03 | 0.00 | 0.00 | 0.00 | 0.000 | 0.00 | 0.060 | 58.1 |
| S33 | 63.1 | 1.01 | 0.042 | 0.024 | 0.034 | Balance | 0.13 | 0.17 | 0.03 | 0.00 | 0.09 | 0.04 | 0.00 | 0.00 | 0.00 | 0.000 | 0.00 | 0.058 | 58.1 |
| S34 | 63.2 | 1.00 | 0.039 | 0.030 | 0.033 | Balance | 0.06 | 0.05 | 0.00 | 0.00 | 0.13 | 0.19 | 0.00 | 0.00 | 0.00 | 0.000 | 0.00 | 0.063 | 58.2 |
| S35 | 63.1 | 1.01 | 0.040 | 0.027 | 0.032 | Balance | 0.19 | 0.27 | 0.03 | 0.00 | 0.08 | 0.04 | 0.00 | 0.00 | 0.00 | 0.000 | 0.00 | 0.059 | 58.1 |
| S36 | 63.3 | 1.03 | 0.063 | 0.025 | 0.035 | Balance | 0.07 | 0.04 | 0.00 | 0.00 | 0.31 | 0.17 | 0.00 | 0.00 | 0.00 | 0.000 | 0.00 | 0.060 | 58.1 |
| Note: "MM" refers to mischmetal. | | | | | | | | | | | | | | | | | | | |

Table 11

| Alloy No. | Component Composition (mass%) | | | | | | Inevitable Impurities (mass%) | | | | | | | | | | | Composition Relational Expression | |
|---|---|---|---|---|---|---|---|---|---|---|---|---|---|---|---|---|---|---|---|
| | Cu | Si | P | Pb | Bi | Zn | Fe | Mn | Co | Cr | Sn | Al | Ni | Sb | Ag | B | MM | f0 | f1 |
| S51 | 65.4 | 1.47 | 0.058 | 0.026 | 0 | Balance | 0.06 | 0.02 | 0.00 | 0.00 | 0.04 | 0.03 | 0.00 | 0.00 | 0.00 | 0.000 | 0.00 | 0.026 | 58.0 |
| S52 | 59.0 | 0.29 | 0.083 | 0.141 | 0.012 | Balance | 0.00 | 0.00 | 0.00 | 0.00 | 0.00 | 0.00 | 0.00 | 0.00 | 0.00 | 0.000 | 0.00 | 0.153 | 57.6 |
| S53 | 63.1 | 1.08 | 0.001 | 0.025 | 0 | Balance | 0.02 | 0.00 | 0.00 | 0.00 | 0.05 | 0.00 | 0.00 | 0.00 | 0.00 | 0.000 | 0.00 | 0.025 | 57.7 |
| S54 | 64.1 | 1.09 | 0.075 | 0.001 | 0 | Balance | 0.01 | 0.01 | 0.00 | 0.00 | 0.01 | 0.00 | 0.00 | 0.00 | 0.00 | 0.000 | 0.00 | 0.001 | 58.6 |
| S55 | 64.8 | 0.98 | 0.085 | 0.101 | 0.028 | Balance | 0.01 | 0.00 | 0.00 | 0.00 | 0.00 | 0.00 | 0.00 | 0.00 | 0.00 | 0.000 | 0.00 | 0.129 | 59.9 |
| S56 | 60.9 | 1.05 | 0.031 | 0.061 | 0 | Balance | 0.00 | 0.00 | 0.00 | 0.00 | 0.01 | 0.00 | 0.00 | 0.00 | 0.00 | 0.000 | 0.00 | 0.061 | 55.7 |
| S57 | 62.5 | 0.72 | 0.025 | 0.033 | 0.007 | Balance | 0.05 | 0.00 | 0.00 | 0.00 | 0.08 | 0.00 | 0.00 | 0.00 | 0.00 | 0.000 | 0.00 | 0.040 | 58.9 |
| S58 | 62.2 | 0.48 | 0.085 | 0.056 | 0.022 | Balance | 0.00 | 0.00 | 0.00 | 0.00 | 0.04 | 0.00 | 0.00 | 0.00 | 0.00 | 0.000 | 0.00 | 0.078 | 59.8 |
| S59 | 60.4 | 0.46 | 0.024 | 0.023 | 0.005 | Balance | 0.00 | 0.00 | 0.00 | 0.00 | 0.00 | 0.00 | 0.00 | 0.00 | 0.00 | 0.000 | 0.00 | 0.028 | 58.1 |
| S60 | 58.4 | 0.09 | 0.011 | 0.178 | 0.058 | Balance | 0.00 | 0.00 | 0.00 | 0.00 | 0.00 | 0.00 | 0.00 | 0.00 | 0.00 | 0.000 | 0.00 | 0.236 | 58.1 |
| S61 | 61.0 | 0.52 | 0.033 | 0.034 | 0 | Balance | 0.05 | 0.00 | 0.00 | 0.00 | 0.08 | 0.00 | 0.00 | 0.00 | 0.00 | 0.000 | 0.00 | 0.034 | 58.4 |
| S62 | 60.8 | 0.42 | 0.078 | 0.163 | 0 | Balance | 0.00 | 0.07 | 0.00 | 0.00 | 0.00 | 0.05 | 0.00 | 0.00 | 0.00 | 0.000 | 0.00 | 0.163 | 58.7 |
| S63 | 58.1 | 0.07 | 0.012 | 0.245 | 0 | Balance | 0.00 | 0.00 | 0.00 | 0.00 | 0.00 | 0.00 | 0.00 | 0.00 | 0.00 | 0.000 | 0.00 | 0.245 | 57.9 |
| Note: "MM" refers to mischmetal. | | | | | | | | | | | | | | | | | | | |

Table 12

| Step No. | Average Cooling Rate during Casting (°C/min) | | | Low-Temperature Annealing | | |
|---|---|---|---|---|---|---|
| | 650-550°C | 530-450°C | 430-350°C | Temperature (°C) | Time (min) | f7 |
| 1 | 40 | 30 | 25 | - | - | - |
| 2 | 50 | 40 | 30 | - | - | - |
| 3 | 8 | 5 | 2 | - | - | - |
| 4 | 20 | 2 | 10 | - | - | - |
| 5 | 75 | 60 | 50 | - | - | - |
| 6 | 60 | 45 | 30 | - | - | - |
| 7 | 80 | 65 | 50 | - | - | - |
| 8 | 40 | 30 | 25 | 350 | 20 | 671 |

Table 13

| Test No. | Alloy No. | Step No. | Metallographic Structure | | | | | | | | | Solidification Temperature Range (°C) | Castability |
|---|---|---|---|---|---|---|---|---|---|---|---|---|---|
| | | | f2 | f3 | f4 | f5 | f6 | f6A | P Compound | Bi Particle in $\alpha$ Phase | Concentration of Si in $\beta$ phase (mass%) | | |
| T01 | S01 | 1 | 47 | 53 | 0 | 0 | 57 | 72 | ○ | - | 1.5 | 14 | ○ |
| T02 | | 2 | 41 | 59 | 0 | 0 | 63 | 78 | ○ | - | 1.4 | | |
| T03 | | 3 | 55 | 43 | 1.9 | 0.9 | 50 | 65 | ○ | - | 1.5 | | |
| T04 | | 4 | 51 | 49 | 0 | 0 | 53 | 68 | ○ | - | 1.5 | | |
| T05 | | 5 | 29 | 71 | 0 | 0 | 76 | 91 | Δ | - | 1.3 | | |
| T06 | | 8 | 53 | 44 | 2.5 | 1.1 | 52 | 67 | ○ | - | 1.4 | | |
| T07 | S02 | 1 | 48 | 52 | 0 | 0 | 52 | 61 | ○ | - | 1.3 | 14 | ○ |
| T08 | S03 | 1 | 43 | 57 | 0 | 0 | 59 | 79 | ○ | - | 1.3 | 13 | ○ |
| T09 | S04 | 1 | 51 | 49 | 0 | 0 | 43 | 52 | ○ | - | 1.0 | 13 | ○ |
| T10 | | 2 | 44 | 56 | 0 | 0 | 50 | 59 | ○ | - | 1.0 | | |
| T11 | | 3 | 57 | 43 | 0 | 0 | 38 | 47 | ○ | - | 1.0 | | |
| T12 | | 4 | 54 | 46 | 0 | 0 | 41 | 50 | ○ | - | 1.1 | | |
| T13 | S05 | 1 | 29 | 71 | 0 | 0 | 74 | 82 | ○ | - | 1.2 | 10 | ○ |
| T14 | S06 | 1 | 64 | 35 | 0.9 | 0.5 | 42 | 50 | ○ | - | 1.7 | 19 | Δ |
| T15 | | 2 | 57 | 43 | 0 | 0 | 48 | 56 | ○ | - | 1.7 | | |
| T16 | | 3 | 78 | 16 | 5.7 | 7.1 | 25 | 34 | ○ | - | 1.4 | | |
| T17 | | 4 | 74 | 22 | 3.8 | 3.5 | 30 | 39 | ○ | - | 1.5 | | |
| T18 | S07 | 1 | 54 | 46 | 0 | 0 | 27 | 44 | ○ | - | 0.6 | 13 | ○ |
| T19 | | 6 | 45 | 55 | 0 | 0 | 32 | 49 | Δ | - | 0.6 | | |
| T20 | | 7 | 36 | 64 | 0 | 0 | 37 | 54 | X | - | 0.5 | | |

Table 14

| Test No. | Alloy No. | Step No. | Properties | | | Lathe | | Drill | | | |
|---|---|---|---|---|---|---|---|---|---|---|---|
| | | | Electrical Conductivity (%IACS) | Vickers Hardness (Hv) | Impact Value (J/cm$^2$) | Chips | Combined Force | Chips | Torque Index | Thrust Index | Drill Index |
| T01 | S01 | 1 | 15.4 | 130 | 46 | ○ | 85 | ○ | 74 | 76 | 75 |
| T02 | | 2 | 15.6 | 134 | 42 | ○ | 86 | ○ | 75 | 76 | 76 |
| T03 | | 3 | 15.2 | 136 | 35 | ○ | 82 | ○ | 76 | 71 | 74 |
| T04 | | 4 | 15.3 | 127 | 47 | ○ | 83 | ○ | 72 | 75 | 74 |
| T05 | | 5 | 15.8 | 143 | 32 | ○ | 79 | ○ | 70 | 74 | 72 |
| T06 | | 8 | 15.2 | 138 | 30 | ○ | 82 | ○ | 75 | 72 | 74 |
| T07 | S02 | 1 | 17.0 | 132 | 51 | ○ | 80 | ○ | 71 | 74 | 73 |
| T08 | S03 | 1 | 16.1 | 136 | 43 | ○ | 86 | ○ | 75 | 77 | 76 |
| T09 | S04 | 1 | 18.5 | 126 | 50 | ○ | 77 | ○ | 71 | 73 | 72 |
| T10 | | 2 | 18.8 | 131 | 45 | ○ | 79 | ○ | 70 | 75 | 73 |
| T11 | | 3 | 18.4 | 120 | 55 | ○ | 75 | ○ | 69 | 71 | 70 |
| T12 | | 4 | 18.4 | 124 | 51 | ○ | 76 | ○ | 68 | 72 | 70 |
| T13 | S05 | 1 | 16.8 | 142 | 31 | ○ | 83 | ○ | 73 | 75 | 74 |
| T14 | S06 | 1 | 14.5 | 129 | 46 | ○ | 79 | ○ | 74 | 70 | 72 |
| T15 | | 2 | 14.7 | 127 | 48 | ○ | 82 | ○ | 72 | 73 | 73 |
| T16 | | 3 | 14.4 | 151 | 21 | X | 66 | Δ | 71 | 61 | 66 |
| T17 | | 4 | 14.5 | 138 | 27 | Δ | 72 | ○ | 72 | 65 | 69 |
| T18 | S07 | 1 | 21.5 | 119 | 62 | ○ | 72 | Δ | 70 | 70 | 70 |
| T19 | | 6 | 21.6 | 122 | 57 | Δ | 70 | Δ | 67 | 69 | 68 |
| T20 | | 7 | 21.8 | 130 | 48 | X | 65 | X | 62 | 65 | 64 |

Table 15

| Test No. | Alloy No. | Step No. | Metallographic Structure | | | | | | | | Solidification Temperature Range (°C) | Castability |
| | | | f2 | f3 | f4 | f5 | f6 | f6A | P Compound | Bi Particle in α Phase | Concentration of Si in β phase (mass%) | | |
|---|---|---|---|---|---|---|---|---|---|---|---|---|---|
| T21 | S08 | 1 | 36 | 64 | 0 | 0 | 65 | 82 | ○ | - | 1.2 | 10 | ○ |
| T22 | S09 | 1 | 49 | 51 | 0 | 0 | 39 | 50 | ○ | - | 0.8 | 11 | ○ |
| T23 | S10 | 1 | 73 | 27 | 0 | 0 | 26 | 43 | ○ | - | 1.4 | 20 | ○ |
| T24 | S11 | 2 | 51 | 49 | 0 | 0 | 46 | 67 | ○ | - | 1.1 | 14 | ○ |
| T25 | S12 | 1 | 60 | 40 | 0 | 0 | 35 | 42 | ○ | - | 1.0 | 15 | ○ |
| T26 | S13 | 2 | 77 | 23 | 0 | 0 | 23 | 39 | ○ | X | 1.4 | 23 | Δ |
| T27 | S14 | 1 | 49 | 51 | 0 | 0 | 46 | 60 | ○ | ○ | 1.1 | 13 | ○ |
| T28 | S15 | 1 | 59 | 41 | 0 | 0 | 33 | 44 | ○ | X | 0.9 | 14 | 0 |
| T29 | | 5 | 45 | 55 | 0 | 0 | 45 | 55 | X | X | 0.8 | | |
| T30 | S16 | 1 | 56 | 44 | 0 | 0 | 44 | 52 | Δ | X | 1.2 | 14 | ○ |
| T31 | S17 | 1 | 37 | 63 | 0 | 0 | 35 | 50 | ○ | X | 0.5 | 9 | ○ |
| T32 | S18 | 1 | 65 | 35 | 0 | 0 | 22 | 36 | ○ | X | 0.6 | 14 | ○ |
| T33 | S19 | 1 | 69 | 31 | 0 | 0 | 30 | 50 | ○ | ○ | 1.3 | 18 | ○ |
| T34 | | 2 | 63 | 37 | 0 | 0 | 36 | 55 | ○ | ○ | 1.3 | | |
| T35 | S20 | 1 | 48 | 52 | 0 | 0 | 53 | 69 | ○ | ○ | 1.3 | 14 | ○ |
| T36 | | 2 | 43 | 57 | 0 | 0 | 58 | 74 | ○ | ○ | 1.2 | | |
| T37 | | 3 | 54 | 45 | 0.9 | 0.4 | 48 | 65 | ○ | ○ | 1.3 | | |
| T38 | | 6 | 39 | 61 | 0 | 0 | 62 | 78 | ○ | ○ | 1.3 | | |
| T39 | | 7 | 31 | 69 | 0 | 0 | 70 | 86 | Δ | ○ | 1.1 | | |
| T40 | | 8 | 56 | 42 | 1.6 | 0.8 | 46 | 63 | ○ | ○ | 1.2 | | |

41

Table 16

| Test No. | Alloy No. | Step No. | Properties | | | Lathe | | Drill | | | |
|---|---|---|---|---|---|---|---|---|---|---|---|
| | | | Electrical Conductivity (%IACS) | Vickers Hardness (Hv) | Impact Value (J/cm²) | Chips | Combined Force | Chips | Torque Index | Thrust Index | Drill Index |
| T21 | S08 | 1 | 17.3 | 139 | 28 | ○ | 85 | ○ | 74 | 75 | 75 |
| T22 | S09 | 1 | 20.2 | 125 | 50 | △ | 75 | ○ | 68 | 71 | 70 |
| T23 | S10 | 1 | 17.0 | 113 | 67 | ○ | 75 | ○ | 70 | 72 | 71 |
| T24 | S11 | 2 | 18.0 | 126 | 47 | ○ | 84 | ○ | 75 | 74 | 75 |
| T25 | S12 | 1 | 17.0 | 113 | 65 | ○ | 72 | △ | 68 | 71 | 70 |
| T26 | S13 | 2 | 18.5 | 110 | 84 | △ | 71 | △ | 67 | 71 | 69 |
| T27 | S14 | 1 | 18.2 | 131 | 55 | ○ | 82 | ○ | 73 | 72 | 73 |
| T28 | S15 | 1 | 19.6 | 118 | 63 | ○ | 73 | ○ | 69 | 71 | 70 |
| T29 | | 5 | 20.1 | 125 | 55 | X | 66 | X | 61 | 67 | 64 |
| T30 | S16 | 1 | 17.2 | 123 | 54 | △ | 72 | △ | 68 | 73 | 71 |
| T31 | S17 | 1 | 22.0 | 123 | 47 | △ | 74 | ○ | 70 | 71 | 71 |
| T32 | S18 | 1 | 21.3 | 110 | 74 | ○ | 71 | △ | 67 | 70 | 69 |
| T33 | S19 | 1 | 17.0 | 114 | 73 | ○ | 80 | ○ | 72 | 73 | 73 |
| T34 | | 2 | 17.3 | 115 | 67 | ○ | 81 | ○ | 73 | 73 | 73 |
| T35 | S20 | 1 | 16.7 | 131 | 50 | ○ | 85 | ○ | 74 | 76 | 75 |
| T36 | | 2 | 17.0 | 133 | 51 | ○ | 86 | ○ | 75 | 75 | 75 |
| T37 | | 3 | 16.8 | 132 | 45 | ○ | 85 | ○ | 76 | 71 | 74 |
| T38 | | 6 | 16.7 | 127 | 48 | ○ | 84 | ○ | 74 | 75 | 75 |
| T39 | | 7 | 17.3 | 139 | 38 | ○ | 81 | ○ | 71 | 72 | 72 |
| T40 | | 8 | 17.0 | 136 | 39 | ○ | 83 | ○ | 76 | 70 | 73 |

EP 3 992 321 A1

42

Table 17

| Test No. | Alloy No. | Step No. | Metallographic Structure | | | | | | | | | Solidification Temperature Range (°C) | Castability |
|---|---|---|---|---|---|---|---|---|---|---|---|---|---|
| | | | f2 | f3 | f4 | f5 | f6 | f6A | P Compound | Bi Particle in α Phase | Concentration of Si in β phase (mass%) | | |
| T41 | S21 | 1 | 61 | 39 | 0 | 0 | 39 | 58 | ○ | ○ | 1.3 | 16 | ○ |
| T42 | | 2 | 54 | 46 | 0 | 0 | 46 | 65 | ○ | ○ | 1.2 | | |
| T43 | | 3 | 66 | 34 | 0 | 0 | 34 | 53 | ○ | ○ | 1.3 | | |
| T44 | | 6 | 51 | 49 | 0 | 0 | 49 | 68 | ○ | ○ | 1.3 | | |
| T45 | | 7 | 40 | 60 | 0 | 0 | 59 | 79 | Δ | ○ | 1.1 | | |
| T46 | | 8 | 64 | 35 | 0.9 | 0.5 | 37 | 57 | ○ | ○ | 1.3 | | |
| T47 | S22 | 1 | 50 | 50 | 0 | 0 | 36 | 52 | ○ | ○ | 0.7 | 12 | ○ |
| T48 | S23 | 1 | 49 | 51 | 0 | 0 | 55 | 73 | ○ | ○ | 1.5 | 15 | ○ |
| T49 | S24 | 1 | 58 | 42 | 0 | 0 | 40 | 52 | ○ | - | 1.2 | 15 | ○ |
| T50 | S25 | 1 | 66 | 34 | 0 | 0 | 30 | 46 | ○ | ○ | 1.2 | 17 | ○ |
| T51 | S26 | 1 | 51 | 49 | 0 | 0 | 46 | 69 | ○ | ○ | 1.1 | 12 | ○ |
| T52 | S27 | 1 | 56 | 44 | 0 | 0 | 35 | 48 | ○ | - | 0.9 | 14 | ○ |
| T53 | S28 | 1 | 58 | 42 | 0 | 0 | 34 | 47 | ○ | - | 0.9 | 16 | ○ |
| T54 | S29 | 1 | 55 | 45 | 0 | 0 | 37 | 49 | ○ | - | 0.9 | 17 | ○ |
| T55 | S30 | 1 | 63 | 37 | 0 | 0 | 29 | 42 | ○ | - | 0.7 | 20 | Δ |
| T56 | S31 | 1 | 58 | 40 | 1.6 | 0.8 | 36 | 49 | ○ | - | 0.8 | 24 | X |
| T57 | S32 | 1 | 60 | 40 | 0 | 0 | 40 | 53 | ○ | ○ | 1.3 | 16 | ○ |
| T58 | S33 | 1 | 61 | 39 | 0 | 0 | 39 | 51 | ○ | ○ | 1.2 | 18 | ○ |
| T59 | S34 | 1 | 61 | 38 | 0.6 | 0.3 | 40 | 53 | ○ | ○ | 1.3 | 19 | ○ |
| T60 | S35 | 1 | 67 | 33 | 0 | 0 | 33 | 45 | ○ | ○ | 1.1 | 22 | Δ |
| T61 | S36 | 1 | 65 | 32 | 2.9 | 1.8 | 38 | 51 | ○ | ○ | 1.2 | 26 | X |

EP 3 992 321 A1

43

Table 18

| Test No. | Alloy No. | Step No. | Properties | | | Lathe | | Drill | | | |
|---|---|---|---|---|---|---|---|---|---|---|---|
| | | | Electrical Conductivity (%IACS) | Vickers Hardness (Hv) | Impact Value (J/cm$^2$) | Chips | Combined Force | Chips | Torque Index | Thrust Index | Drill Index |
| T41 | S21 | 1 | 17.5 | 124 | 54 | O | 83 | O | 73 | 74 | 74 |
| T42 | | 2 | 17.8 | 127 | 50 | O | 84 | O | 74 | 74 | 74 |
| T43 | | 3 | 17.6 | 120 | 57 | O | 81 | O | 71 | 74 | 73 |
| T44 | | 6 | 17.8 | 125 | 52 | O | 82 | O | 72 | 74 | 73 |
| T45 | | 7 | 18.0 | 137 | 37 | O | 78 | Δ | 69 | 72 | 71 |
| T46 | | 8 | 17.5 | 127 | 53 | O | 83 | O | 75 | 70 | 73 |
| T47 | S22 | 1 | 20.8 | 118 | 55 | O | 78 | O | 72 | 72 | 72 |
| T48 | S23 | 1 | 15.2 | 134 | 49 | O | 87 | O | 75 | 77 | 76 |
| T49 | S24 | 1 | 17.0 | 113 | 60 | O | 81 | O | 72 | 74 | 73 |
| T50 | S25 | 1 | 18.1 | 115 | 68 | O | 79 | O | 70 | 72 | 71 |
| T51 | S26 | 1 | 17.9 | 126 | 52 | O | 87 | O | 76 | 76 | 76 |
| T52 | S27 | 1 | 19.7 | 122 | 56 | O | 78 | O | 71 | 72 | 72 |
| T53 | S28 | 1 | 19.5 | 127 | 57 | O | 76 | O | 70 | 71 | 71 |
| T54 | S29 | 1 | 19.6 | 124 | 50 | O | 78 | O | 72 | 68 | 70 |
| T55 | S30 | 1 | 19.2 | 126 | 51 | Δ | 67 | X | 63 | 67 | 65 |
| T56 | S31 | 1 | 19.5 | 135 | 35 | X | 70 | Δ | 69 | 62 | 66 |
| T57 | S32 | 1 | 16.9 | 121 | 52 | O | 79 | O | 71 | 72 | 72 |
| T58 | S33 | 1 | 16.6 | 123 | 54 | O | 77 | O | 69 | 70 | 70 |
| T59 | S34 | 1 | 16.7 | 125 | 44 | O | 78 | O | 71 | 68 | 70 |
| T60 | S35 | 1 | 16.6 | 128 | 47 | Δ | 68 | X | 64 | 65 | 65 |
| T61 | S36 | 1 | 16.5 | 135 | 28 | Δ | 70 | Δ | 68 | 61 | 65 |

EP 3 992 321 A1

44

Table 19

| Test No. | Alloy No. | Step No. | Metallographic Structure | | | | | | | | | Solidification Temperature Range (°C) | Castability |
|---|---|---|---|---|---|---|---|---|---|---|---|---|---|
| | | | f2 | f3 | f4 | f5 | f6 | f6A | P Compound | Bi Particle in $\alpha$ Phase | Concentration of Si in $\beta$ phase (mass%) | | |
| T100 | S51 | 1 | 68 | 28 | 3.7 | 2.6 | 37 | 47 | O | - | - | 27 | X |
| T101 | | 2 | 59 | 38 | 2.2 | 1.2 | 47 | 57 | O | - | - | | |
| T102 | | 3 | 78 | 14 | 7.4 | 10.6 | 24 | 34 | O | - | - | | |
| T103 | | 4 | 76 | 18 | 5.6 | 6.2 | 27 | 37 | O | - | - | | |
| T104 | S52 | 1 | 52 | 48 | 0 | 0 | 19 | 38 | O | X | 0.3 | - | - |
| T105 | | 2 | 46 | 54 | 0 | 0 | 21 | 40 | O | - | - | | |
| T106 | S53 | 1 | 54 | 46 | 0 | 0 | 48 | 54 | X | - | - | - | - |
| T107 | | 3 | 61 | 37 | 1.3 | 0.7 | 42 | 48 | X | - | 1.3 | | |
| T108 | S54 | 1 | 69 | 31 | 0 | 0 | 32 | 38 | O | - | - | - | - |
| T109 | S55 | 1 | 85 | 15 | 0 | 0 | 15 | 33 | O | O | 1.4 | 31 | X |
| T110 | S56 | 1 | 14 | 86 | 0 | 0 | 88 | 100 | O | - | 1.1 | 9 | - |
| T111 | S57 | 1 | 74 | 26 | 0 | 0 | 21 | 31 | O | O | 0.9 | 18 | O |
| T112 | S58 | 1 | 84 | 16 | 0 | 0 | 10 | 25 | O | X | 0.7 | 23 | Δ |
| T113 | S59 | 1 | 61 | 39 | 0 | 0 | 23 | 31 | O | - | 0.6 | 13 | - |
| T114 | S60 | 1 | 52 | 48 | 0 | 0 | 6 | 26 | O | X | - | - | - |
| T115 | S61 | 1 | 68 | 32 | 0 | 0 | 21 | 30 | O | - | 0.7 | 15 | - |
| T116 | S62 | 1 | 71 | 29 | 0 | 0 | 16 | 35 | O | - | 0.5 | 17 | - |
| T117 | S63 | 1 | 47 | 53 | 0 | 0 | 5 | 26 | O | - | - | - | - |

EP 3 992 321 A1

45

Table 20

| Test No. | Alloy No. | Step No. | Properties | | | Lathe | | Drill | | | |
|---|---|---|---|---|---|---|---|---|---|---|---|
| | | | Electrical Conductivity (%IACS) | Vickers Hardness (Hv) | Impact Value (J/cm²) | Chips | Combined Force | Chips | Torque Index | Thrust Index | Drill Index |
| T100 | S51 | 1 | 13.5 | 146 | 27 | O | 77 | O | 71 | 66 | 69 |
| T101 | | 2 | 13.7 | 139 | 34 | O | 82 | O | 74 | 70 | 72 |
| T102 | | 3 | 13.4 | 154 | 20 | X | 64 | △ | 65 | 61 | 63 |
| T103 | | 4 | 13.7 | 152 | 23 | △ | 67 | △ | 68 | 63 | 66 |
| T104 | S52 | 1 | 23.5 | 99 | 71 | X | 60 | X | 59 | 64 | 62 |
| T105 | | 2 | 23.7 | 103 | - | X | 61 | X | 61 | 65 | 63 |
| T106 | S53 | 1 | 17.1 | 124 | 53 | X | 66 | X | 63 | 68 | 66 |
| T107 | | 3 | 17.2 | 123 | 44 | X | 65 | X | 67 | 61 | 64 |
| T108 | S54 | 1 | 16.1 | 112 | 69 | X | 65 | X | 64 | 69 | 67 |
| T109 | S55 | 1 | 16.5 | 98 | 92 | X | 58 | X | 60 | 66 | 63 |
| T110 | S56 | 1 | 17.7 | 164 | 22 | O | 88 | O | 73 | 76 | 75 |
| T111 | S57 | 1 | 19.3 | 115 | 74 | X | 67 | △ | 67 | 68 | 68 |
| T112 | S58 | 1 | 20.6 | 82 | 95 | X | 54 | X | 55 | 59 | 57 |
| T113 | S59 | 1 | 21.2 | 107 | 65 | X | 64 | X | 64 | 67 | 66 |
| T114 | S60 | 1 | 25.1 | 93 | - | X | 55 | X | 58 | 63 | 61 |
| T115 | S61 | 1 | 21.0 | 102 | 72 | X | 63 | X | 62 | 68 | 65 |
| T116 | S62 | 1 | 22.0 | 95 | 77 | X | 64 | X | 63 | 69 | 66 |
| T117 | S63 | 1 | 25.4 | 92 | - | X | 56 | X | 59 | 63 | 61 |

From the above-described measurement results, the following findings were obtained.

1) By satisfying a composition of an embodiment of the present invention, the composition relational expressions f0 and f1, the metallographic structure-related requirements, i.e., the metallographic structure relational expressions f2 to f6, and the metallographic structure and composition relational expression f6A, even if the content of Pb was small, a copper alloy casting having good machinability, a solidification temperature range of 25°C or lower, good castability, electrical conductivity of 13% IACS or higher, high strength (Vickers hardness), and good toughness (impact resistance) was obtained (e.g., Alloys Nos. S01 to S12).

2) By the effects of P contained in an amount higher than 0.003 mass% and presence of P-containing compounds having a size of 0.3 to 3.0 $\mu$m, chip breakability was improved and cutting resistance was reduced. Even when the amount of $\gamma$ phase was 0%, excellent machinability was able to be secured. When P was contained in an amount exceeding 0.010 mass% and cooling was performed at an appropriate cooling rate, P-containing compounds were able to be observed with a metallographic microscope having a magnification power of 500x (e.g., Alloys Nos. S01 to S26, Step No. 1).

3) When the Si content was low, the machinability was poor. When the Si content was high, the amount of $\gamma$ phase was large, the impact value was low, and the machinability was also low. When the Si content was lower than 0.4 mass%, even if the Pb content or the total content of Pb and Bi was about 0.24 mass%, the machinability was poor. From this result, it is presumed that the machinability of $\beta$ phase significantly changes depending on whether the Si content is below or above about 0.3 mass% (Alloys Nos. S52, S51, S60, and S63).

4) When the Si content in $\beta$ phase was in a range of 0.5 mass% or higher and 1.7 mass% or lower, excellent machinability was obtained (Alloys Nos. S01 to S36).

5) When the P content was 0.003 mass% or lower, chip breakability during turning and drilling were both poor, and cutting resistance was high (Alloy No. S53).

6) When the Pb content was 0.002 mass% or lower, the machinability was poor (Alloy No. S54). When the Pb content was higher than 0.002 mass%, the machinability was better, and as the Pb content was increased, the machinability improved (Alloys Nos. S5 and S12).

7) It was verified that Bi performs in place of Pb for the most part. When particles including Bi were present in $\alpha$ phase, the machinability was better. The reason for this machinability improvement is presumed to be brought by improved machinability of $\alpha$ phase. When Bi was contained in an amount close to 0.10 mass%, the impact value was slightly lower (Alloys Nos. S13 to S26). When the Si content was 0.1 mass%, even if the Bi content was higher than 0.02 mass%, particles including Bi were not observed in $\alpha$ phase, and the machinability was poor (Alloy No. S60).

8) It was verified that, even if inevitable impurities (Fe, Mn, Cr, Co, Sn, or Al) were included in an amount actually included in a commercially manufactured alloy, there was no significant influence on the properties (Alloys Nos. S27 to S36). When the total content of Fe, Mn, Cr, and Co exceeded the preferable range of inevitable impurities, the machinability deteriorated. The reason for this deterioration is presumed to be caused by a decrease in the concentration of Si which has a positive effect on machinability due to formation of intermetallic compounds between Fe, Mn, or the like and Si. Further, it is presumed that the composition of P-containing compound may have changed. In addition, the castability was also poor (Alloys Nos. S30 and S35). When the total content of Sn and Al exceeded the preferable range of inevitable impurities, the amount of $\gamma$ phase increased, the impact value decreased, and also the machinability slightly deteriorated. It is presumed that the characteristics of $\gamma$ phase and $\beta$ phase were changed by the large amounts of Sn and Al contained. In addition, due to the large amounts of Sn and Al, the solidification temperature range slightly widened and the castability deteriorated (Alloys Nos. S31 and S36).

9) When the composition relational expression f1 was lower than 56.0, the amount of $\beta$ phase was large, and the impact value was low. When f1 was higher than 59.5, the solidification temperature range was wide, the hardness was also low, and the machinability and castability were poor (Alloys Nos. S55, S56, and S58). When the value of f1 was 56.3 or higher, the impact value was better. On the other hand, when the value of f1 was 59.2 or lower, 59.0 or lower, and further, 58.5 or lower, the machinability was further improved. When f1 was 58.0 or lower, the impact value was further improved. In addition, the solidification range was narrowed, and the result of the Tatur test was improved (Alloys Nos. S01 to S26).

10) When f3 representing the amount of $\beta$ phase was 45 or higher, or 50 or higher, and the relational expression f6 was 50 or higher, the machinability of $\beta$ single-phase alloy, Alloy F, was substantially maintained (for example, Alloys Nos. S01 and S03).

11) When the amount of $\beta$ phase was less than 18%, excellent machinability was not obtained. When the amount of $\beta$ phase was higher than 80%, the impact value was low (Alloys Nos. S55, S56, and S58).

12) Even when the amount of $\gamma$ phase was 0%, if an appropriate amount of $\beta$ phase was present, excellent machinability and mechanical characteristics were obtained (for example, Alloys Nos. S02 and S03). When the amount of $\gamma$ phase was 2% or lower and $20 \times (\gamma) / (\beta) < 1$, the torque index was high, and chips generated in drilling were finely broken (for example, Alloy No. S21; Test No. T46).

13) When the amount of γ phase was 5% or higher or 20 × (γ) / (β) was larger than 4, the impact value and the machinability index were low (Alloys Nos. S51 and S06; Test No. T16).

14) When the metallographic structure relational expression f6 was 18 or higher, the machinability improved. When f6 was 25 or higher, the machinability further improved. When f6 was 30 or higher, or 40 or higher, the machinability improved even further. When f6 was 82 or lower, the impact value was improved (Alloys Nos. S03, S07, S08, and S05).

15) When the relational expression f6A was 33 or higher, excellent machinability was obtained. As the relational expression f6A increased to 40 or higher, then to 45 or higher, the machinability further improved (Alloys Nos. S01 to S26). On the other hand, even when the composition range and the relational expressions f0 to f5 were satisfied, unless both f6 and f6A were satisfied, the machinability was poor (Alloys Nos. S57, S59, and S61). Even if f6 and f6A were satisfied, when the Si content was small, the machinability was poor (Alloy No. S52).

16) As the cooling rate in each of the temperature ranges after casting changed, the proportion of β phase changed, and due to the change in the cooling rate, whether or not γ phase was present, the amount of γ phase, and the like also changed. Along with the change in the metallographic structure, the properties also changed (Steps Nos. 1 to 8).

17) Although depending on the P content, the average cooling rate of about 55 °C/min in a range from 530°C to 450°C in the process of cooling after casting was roughly the boundary value that determines whether or not P-containing compounds that are visible with a metallographic microscope having a magnification power of 500x or an electron microscope having a magnification power of 2000x were present. When P-containing compounds were able to be observed with a metallographic microscope having a magnification power of 500x, the machinability was good (evaluation: "O") (Alloys Nos. S01 to S26). The test samples in which the presence of P-containing compounds was able to be detected with an electron microscope having a magnification power of 2000x exhibited slightly poorer machinability than that of the test samples in which the presence of P-containing compounds was able to be detected with a metallographic microscope having a magnification power of 500x, but excellent machinability was secured (for example, Alloy No. S01; Step No. 5, and Alloy No. S21; Step No. 7). The test samples in which the presence of P-containing compounds was not detected exhibited poor machinability (Alloy No. S07; Step No. 7, and Alloy No. S15; Step No. 5).

18) When the casting was annealed at a low temperature, γ phase newly precipitated. When the amount of γ phase was appropriate, the torque index was good (for example, Alloy No. S21; Test No. T46).

As described above, free-cutting copper alloy castings according to an embodiment of the present invention in which the content of each of the elements added, the composition relational expressions, and the respective metallographic structure relational expressions are in appropriate ranges have excellent machinability and castability, and their mechanical characteristics are also good.

Industrial Applicability

Free-cutting copper alloy castings according to an embodiment of the present invention have excellent castability and machinability, high strength, and good toughness although the amount of Pb contained is small. Therefore, the free-cutting copper alloy castings are suitable for mechanical components, automobile components, electrical or electronic apparatus components, toys, sliding components, measuring instrument components, precision mechanical components, medical components, fittings for construction, faucet fittings, drink-related devices and components, devices and components for water drainage, industrial plumbing components, pressure vessels, and components relating to liquid or gas such as hydrogen.

Specifically, the free-cutting copper alloys can be suitably applied as a material that constitutes the items used in the above-mentioned fields which go by the names including valve, joint, tap water faucet, waste water plug, faucet fitting, gear, bearing, sleeve, flange, and sensor.

**Claims**

1. A free-cutting copper alloy casting comprising:

   higher than 58.5 mass% and lower than 65.0 mass% of Cu;
   higher than 0.40 mass% and lower than 1.40 mass% of Si;
   higher than 0.002 mass% and lower than 0.25 mass% of Pb;
   higher than 0.003 mass% and lower than 0.19 mass% of P; and
   higher than or equal to 0.001 mass% and lower than or equal to 0.100 mass% of Bi as an optional element,
   with the balance being Zn and inevitable impurities,
   wherein among the inevitable impurities, the total content of Fe, Mn, Co, and Cr is lower than 0.45 mass% and the total content of Sn and Al is lower than 0.45 mass%,
when a Cu content is represented by [Cu] mass%, a Si content is represented by [Si] mass%, a Pb content is represented by [Pb] mass%, a Bi content is represented by [Bi] mass%, and a P content is represented by [P] mass%, a relationship of

$$56.0 \leq f1 = [Cu] - 5 \times [Si] + 0.5 \times [Pb] + 0.5 \times [Bi] - 0.5 \times [P] \leq 59.5$$

is satisfied,
when Bi is not included, [Bi] in f1 is 0,
when Bi is included, a relationship of

$$0.003 < f0 = [Pb] + [Bi] < 0.25$$

is further satisfied,
in constituent phases of a metallographic structure excluding non-metallic inclusions, when an area ratio of $\alpha$ phase is represented by $(\alpha)\%$, an area ratio of $\gamma$ phase is represented by $(\gamma)\%$, and an area ratio of $\beta$ phase is represented by $(\beta)\%$, relationships of

$$20 \leq (\alpha) \leq 80,$$

$$18 \leq (\beta) \leq 80,$$

$$0 \leq (\gamma) < 5,$$

$$20 \times (\gamma) / (\beta) < 4,$$

$$18 \leq (\gamma)^{1/2} \times 3 + (\beta) \times (-0.5 \times [Si]^2 + 1.5 \times [Si]) \leq 82,$$

and

$$33 \leq (\gamma)^{1/2} \times 3 + (\beta) \times (-0.5 \times [Si]^2 + 1.5 \times [Si]) + ([Pb] + [Bi])^{1/2} \times 38 + ([P])^{1/2} \times 15$$

are satisfied,
when Bi is not included, [Bi] in the expression is 0, and
a compound including P is present in $\beta$ phase.

2. A free-cutting copper alloy casting comprising:

higher than 59.0 mass% and lower than 65.0 mass% of Cu;
higher than 0.50 mass% and lower than 1.35 mass% of Si;
higher than 0.010 mass% and lower than 0.20 mass% of Pb;
higher than 0.010 mass% and lower than 0.15 mass% of P; and
higher than or equal to 0.001 mass% and lower than or equal to 0.100 mass% of Bi as an optional element,
with the balance being Zn and inevitable impurities,
wherein among the inevitable impurities, the total content of Fe, Mn, Co, and Cr is lower than 0.40 mass% and the total content of Sn and Al is lower than 0.40 mass%,

when a Cu content is represented by [Cu] mass%, a Si content is represented by [Si] mass%, a Pb content is represented by [Pb] mass%, a Bi content is represented by [Bi] mass%, and a P content is represented by [P] mass%,

a relationship of

$$56.3 \leq f1 = [Cu] - 5 \times [Si] + 0.5 \times [Pb] + 0.5 \times [Bi] - 0.5 \times [P] \leq 59.2$$

is satisfied,

when Bi is not included, [Bi] in f1 is 0,

when Bi is included, a relationship of

$$0.020 \leq f0 = [Pb] + [Bi] < 0.20$$

is further satisfied,

in constituent phases of a metallographic structure excluding non-metallic inclusions, when an area ratio of $\alpha$ phase is represented by $(\alpha)$ %, an area ratio of $\gamma$ phase is represented by $(\gamma)$%, and an area ratio of $\beta$ phase is represented by $(\beta)$%, relationships of

$$25 \leq (\alpha) \leq 75,$$

$$25 \leq (\beta) \leq 75,$$

$$0 \leq (\gamma) < 3,$$

$$20 \times (\gamma) / (\beta) < 2,$$

$$25 \leq (\gamma)^{1/2} \times 3 + (\beta) \times (-0.5 \times [Si]^2 + 1.5 \times [Si]) \leq 76,$$

and

$$40 \leq (\gamma)^{1/2} \times 3 + (\beta) \times (-0.5 \times [Si]^2 + 1.5 \times [Si]) + ([Pb] + [Bi])^{1/2} \times 38 + ([P])^{1/2} \times 15$$

are satisfied,

when Bi is not included, [Bi] in the expression is 0, and

a compound including P is present in $\beta$ phase.

3. A free-cutting copper alloy casting comprising:

higher than 59.5 mass% and lower than 64.5 mass% of Cu;
higher than 0.60 mass% and lower than 1.30 mass% of Si;
higher than 0.010 mass% and lower than 0.15 mass% of Pb;
higher than 0.020 mass% and lower than 0.14 mass% of P; and
higher than 0.020 mass% and lower than or equal to 0.100 mass% of Bi,
with the balance being Zn and inevitable impurities,
wherein among the inevitable impurities, the total content of Fe, Mn, Co, and Cr is lower than 0.35 mass% and the total content of Sn and Al is lower than 0.35 mass%,

when a Cu content is represented by [Cu] mass%, a Si content is represented by [Si] mass%, a Pb content is represented by [Pb] mass%, a Bi content is represented by [Bi] mass%, and a P content is represented by [P] mass%, relationships of

$$0.040 \leq f0 = [Pb] + [Bi] < 0.18$$

and

$$56.5 \leq f1 = [Cu] - 5 \times [Si] + 0.5 \times [Pb] + 0.5 \times [Bi] -$$

$$0.5 \times [P] \leq 59.0$$

are satisfied,
in constituent phases of a metallographic structure excluding non-metallic inclusions, when an area ratio of $\alpha$ phase is represented by ($\alpha$) %, an area ratio of $\gamma$ phase is represented by ($\gamma$)%, and an area ratio of $\beta$ phase is represented by ($\beta$)%, relationships of

$$30 \leq (\alpha) \leq 70,$$

$$30 \leq (\beta) \leq 70,$$

$$0 \leq (\gamma) < 2,$$

$$20 \times (\gamma) / (\beta) < 1,$$

$$30 \leq (\gamma)^{1/2} \times 3 + (\beta) \times (-0.5 \times [Si]^2 + 1.5 \times [Si]) \leq 70,$$

and

$$45 \leq (\gamma)^{1/2} \times 3 + (\beta) \times (-0.5 \times [Si]^2 + 1.5 \times [Si]) +$$

$$([Pb] + [Bi])^{1/2} \times 38 + ([P])^{1/2} \times 15$$

are satisfied,
a compound including P is present in $\beta$ phase, and a particle including Bi is present in $\alpha$ phase.

4. The free-cutting copper alloy casting according to any one of claims 1 to 3,
   wherein a solidification temperature range is 25°C or lower.

5. The free-cutting copper alloy casting according to any one of claims 1 to 4,

   wherein a Vickers hardness is 105 Hv or higher, and
   an impact value obtained when a U-notch impact test is performed is 25 J/cm$^2$ or higher.

6. The free-cutting copper alloy casting according to any one of claims 1 to 5, which is used for a mechanical component, an automobile component, an electrical or electronic apparatus component, a toy, a sliding component, a pressure vessel, a measuring instrument component, a precision mechanical component, a medical component, a fitting for construction, a faucet fitting, a drink-related device or component, a device or component for water drainage, or an industrial plumbing component.

7. A method for producing the free-cutting copper alloy casting according to any one of claims 1 to 6, the method comprising:

a melting and casting step,
wherein in the melting and casting step, an average cooling rate in a temperature range from 530°C to 450°C in a process of cooling after casting is in a range of 0.1 °C/min or higher and 55 °C/min or lower.

## FIG. 1

## FIG. 2

## FIG. 3

## FIG. 4

←THE PORTION THAT SOLIDIFIED LAST

## FIG. 5

## FIG. 6

## FIG. 7

## FIG. 8

## INTERNATIONAL SEARCH REPORT

| International application No. |
| --- |
| PCT/JP2020/006037 |

**A. CLASSIFICATION OF SUBJECT MATTER**
Int.Cl. C22C9/04(2006.01)i, C22F1/00(2006.01)n, C22F1/08(2006.01)i
FI: C22C9/04, C22F1/08K, C22F1/00611, C22F1/00612, C22F1/00623,
C22F1/00624, C22F1/00625, C22F1/00626, C22F1/00630A, C22F1/00630B,
C22F1/00630C, C22F1/00630J, C22F1/00630K, C22F1/00631A, C22F1/00631Z,
C22F1/00641A, C22F1/00641Z, C22F1/00650F, C22F1/00660Z, C22F1/00661A,
C22F1/00661Z, C22F1/00673, C22F1/00674, C22F1/00675, C22F1/00682,
C22F1/00683, C22F1/00684A, C22F1/00684C, C22F1/00685Z, C22F1/00686A,
C22F1/00691B, C22F1/00691C, C22F1/00692A, C22F1/00692B, C22F1/00694A,
C22F1/00694B
According to International Patent Classification (IPC) or to both national classification and IPC

**B. FIELDS SEARCHED**

Minimum documentation searched (classification system followed by classification symbols)
Int.Cl. C22C9/04, C22F1/08, C22F1/00

Documentation searched other than minimum documentation to the extent that such documents are included in the fields searched
Published examined utility model applications of Japan       1922-1996
Published unexamined utility model applications of Japan     1971-2020
Registered utility model specifications of Japan             1996-2020
Published registered utility model applications of Japan     1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2016-194123 A (DOWA METALTECH KK) 17.11.2016 (2016-11-17) | 1-7 |
| A | WO 2013/065830 A1 (MITSUBISHI SHINDOH CO., LTD.) 10.05.2013 (2013-05-10) | 1-7 |
| A | WO 2006/016630 A1 (SANBO SHINDO KOGYO KABUSHIKI KAISHA) 16.02.2006 (2006-02-16) | 1-7 |
| A | WO 2015/046421 A1 (MITSUBISHI SHINDOH CO., LTD.) 02.04.2015 (2015-04-02) | 1-7 |

☒ Further documents are listed in the continuation of Box C.   ☒ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 21.04.2020 | 12.05.2020 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2020/006037

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2009/048008 A1 (TOTO LTD.) 16.04.2009 (2009-04-16) | 1-7 |
| A | US 4259124 A (OLIN CORPORATION) 31.03.1981 (1981-03-31) | 1-7 |

Form PCT/ISA/210 (second sheet) (January 2015)

| INTERNATIONAL SEARCH REPORT | International application No. |
|---|---|
| Information on patent family members | PCT/JP2020/006037 |

```
JP 2016-194123 A    17.11.2016    (Family: none)

WO 2013/065830 A1  10.05.2013    US 2014/0251488 A1
                                 EP 2775005 A1
                                 CN 103917674 A
                                 KR 10-2014-0070642 A
                                 MX 2014005234 A
                                 TW 201331392 A

WO 2006/016630 A1  16.02.2006    US 2007/0158002 A1
                                 EP 1777306 A1
                                 CA 2561295 A1
                                 NO 344238 B1
                                 KR 10-2007-0040749 A
                                 CN 1969050 A
                                 BR PI0509025 A
                                 RU 2006136408 A
                                 AU 2005256111 A1
                                 NZ 552015 A
                                 CL 2012003194 A1

WO 2015/046421 A1  02.04.2015    US 2016/0186295 A1
                                 EP 3050982 A1
                                 TW 201516164 A
                                 CA 2922455 A1
                                 AU 2014325066 A1
                                 KR 10-2016-0040313 A
                                 CN 105579600 A
                                 KR 10-2016-0041995 A
                                 MX 2016003813 A
                                 ES 2699481 T3

WO 2009/048008 A1  16.04.2009    US 2009/0263272 A1
                                 EP 2196549 A1
                                 CN 101541986 A
                                 TW 200930822 A

US 4259124 A       31.03.1981    US 4205984 A
```

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019116914 A
- JP 2019130143 A
- JP 2019141096 A
- JP 2019163773 A
- JP 2019048438 W
- JP 2019048455 W
- JP 2019050255 W
- WO 2008081947 A
- JP 2000119775 A
- JP 2000119774 A
- WO 2007034571 A
- WO 2006016442 A
- WO 2006016624 A
- JP 2016511792 W
- JP 2004263301 A
- JP 2013104071 A
- WO 2019035225 A
- JP 2018048397 A
- JP 2019508584 W
- US 4055445 A
- JP 2016194123 A
- WO 2005093108 A

### Non-patent literature cited in the description

- **GENJIRO MIMA ; MASAHARU HASEGAWA.** *Journal of the Japan Copper and Brass Research Association,* 1963, vol. 2, 62-77
- Basic and Industrial Technique of Copper and Copper Alloy. Japan Copper and Brass Association, 1994, 533
- Properties and Selection: Nonferrous Alloys and Special-Purpose Materials. Metals Handbook. ASM International, 1990, vol. 2, 217-228